# EUROPÄISCHE PATENTANMELDUNG

(11) **EP 1 754 980 A1**
(43) Veröffentlichungstag der Anmeldung: **21.02.2007**
(21) Anmeldenummer: 06014919.2
(22) Anmeldetag: 18.07.2006
(51) Int. Cl.: G01S 5/14

(54) **Beschleunigung der satellitengestützten Positionserstbestimmung**

(30) Priorität: 16.08.2005 DE 102005038674
(71) Anmelder: Jentro Technologies GmbH, 81671 München (DE)
(72) Erfinder: Hempel, Erno, 81671 München (DE)
(74) Vertreter: Müller-Boré & Partner Patentanwälte

(57) **Zusammenfassung**

In einem Netzwerk aus einer Basisstation (BST) mit zumindest zwei mobilen Endgeräten (200, 300), die mit Empfangsmitteln (203, 303) zum Empfang von Satellitensignalen ausgerüstet sind, mittels derer die geographische Position des Empfangsmittels (203, 303) ermittelt werden kann, dient zumindest ein mobiles Endgerät als Referenzgerät (200) und stellt im Netzwerk Satellitendaten zur Verfügung, welche andere mobile Endgeräte, die als Zielgeräte (300) fungieren zur Beschleunigung der Positionserstbestimmung verwenden können.

## Beschreibung

### Gebiet der Erfindung

Die Erfindung bezieht sich auf ein mobiles Endgerät mit einem Empfangsmittel zum Empfang von Satellitensignalen, mittels derer die geographische Position des Empfangsmittels ermittelt werden kann, eine Basisstation mit einer Kommunikationseinrichtung für ein Netzwerk mit mobilen Endgeräten, einen Satellitendatenempfänger mit einem Empfangsmittel und einer Schnittstelle zur Kommunikation mit einem mobilen Endgerät, ein Verfahren zur Beschleunigung einer Bestimmung einer geographischen Position eines mobilen Endgeräts zur Verwendung mit einem mobilen Endgerät, ein solches Verfahren zur Verwendung mit einer Basisstation, ein solches Verfahren zur Verwendung mit einem Satellitendatenempfänger, und auf Computerprogrammprodukte zur Ausführung eines dieser Verfahren.

### Hintergrund der Erfindung und Stand der Technik

Es existieren weltweit verschiedene satellitengestützte Systeme zur Positions- bzw. Ortsbestimmung, Navigation oder für ähnlichen Aufgaben, die mit der geographischen Position eines Empfangsgerätes zusammenhängen. Eines dieser Systeme ist das NAVSTAR-GPS (Navigational Satellite Timing and Ranging - Global Positioning System), das vom United States Department of Defense (US-Verteidigungsministerium) betrieben wird. Das System wird üblicherweise GPS genannt, und wird auch im folgenden so bezeichnet werden.

Andere Satellitensysteme zur Ortsbestimmung sind oder waren z. B. Transit (der Vorgänger des GPS), GLONASS, ein russisches Pendant, Euteltracs ein Europäisches Positionssystem für den Fernverkehr, und Galileo, ein von der EU beauftragtes Projekt, das bisher noch nicht in Betrieb genommen wurde, sowie andere Systeme.

Im folgenden soll exemplarisch das GPS näher erläutert werden.

GPS war ursprünglich zur Positionsbestimmung und Navigation im militärischen Bereich (in Waffensystemen, Kriegsschiffen, Flugzeugen) vorgesehen. Heute wird es auch im zivilen Bereich genutzt: in der Seefahrt, Luftfahrt, durch Navigationssysteme im Auto, zur Orientierung im Outdoor-Bereich, im Vermessungswesen etc.

GPS basiert auf Satelliten, die ständig Signale ausstrahlen, aus deren Signallaufzeit GPS-Empfangsgeräte ihre Position bestimmen können. Theoretisch reichen dazu die Signale aus drei Satelliten, da daraus die genaue Position und Höhe bestimmt werden kann. In der Praxis haben aber die meisten GPS-Empfangsgeräte keine Uhr, die genau genug ist, um daraus die Laufzeiten korrekt berechnen zu können. Deshalb wird meist das Signal zumindest eines vierten Satelliten benötigt. Vorteilhaft ist es, wenn sich die Satelliten von dem Empfangsgerät aus gesehen in unterschiedlichen Himmelsrichtung befinden.

Mit den GPS-Signalen läßt sich darüber hinaus auch die Geschwindigkeit des Empfangsgeräts bestimmen: Durch die relative Bewegung des Empfangsgeräts zu den Satelliten, ergibt sich durch den Doppler-Effekt eine Verschiebung des Signals und da die Geschwindigkeit der Satelliten bekannt ist, läßt sich die Geschwindigkeit des Empfangsgeräts berechnen.

Damit ein GPS-Empfangsgerät immer zu mindestens vier Satelliten Kontakt hat, werden insgesamt mindestens 24 Satelliten auf 6 Bahnen eingesetzt, welche die Erde jeweils in einer Höhe von 20.200 km alle 12 Stunden einmal umkreisen. Um Ausfällen der Satelliten vorzubeugen wurden zusätzliche Satelliten in den Orbit gebracht, so daß sich im Jahr 2005 31 Satelliten im Umlauf befanden. Auf jeder der 6 Bahnebenen befinden sich mindestens vier Satelliten. Jede Bahnebene ist um etwa 55° gegen die Äquatorebene geneigt, und um die Erdachse gegen die benachbarten Bahnebenen um jeweils etwa 60° verdreht.

Die Satelliten weisen zwei Sender auf, die insbesondere in Spreizbandtechnik arbeiten und auf den GPS-Frequenzen von 1,57542 GHz (sogenannte L1-Frequenz) und 1,2276 GHz (sogenannte L2-Frequenz) senden. Die GPS-Signale werden bevorzugt in Phasenmodulation auf diese Trägerfrequenzen aufmoduliert.

Eine Erhöhung der Genauigkeit der Positionsermittelung (etwa 0,5 - 5 m) kann durch Einsatz von Differential GPS (DGPS) erreicht werden. Differential Global Positioning System (DGPS) ist eine Bezeichnung für Verfahren, die mehrere GPS-Empfangsgeräte zur Erhöhung der Genauigkeit verwenden.

Aufgrund seiner dargestellten Eigenschaften ist das GPS Verfahren auch für den Einsatz in Verbindung mit Mobiltelefonen interessant, z. B. um dort ortsbasierte Dienste (Location Based Services) anzubieten. Dabei ergeben sich unter anderem Probleme durch die Zeit, die bis zu einer ersten Positionsbestimmung vergehen kann, da für eine Initialisierung bestimmte Daten benötigt werden, die, wenn sie nicht schon bekannt sind, neu empfangen oder ermittelt werden müssen. Je mehr der benötigten Daten bei Beginn der Positionsbestimmung bereits bekannt sind, desto schneller läuft die Positionsbestimmung ab. Je nachdem welche dieser benötigten Informationen gespeichert sind, spricht man von einem "hot start", einem "warm start" oder einem "cold start". Als "hot start" kann zum Beispiel der Zustand bezeichnet werden, in dem die Almanachdaten gespeichert sind, die Ephemeridendaten weniger als zwei Stunden alt sind, die Empfangszeit auf weniger als etwa 5 Minuten genau bestimmt ist und die eigene Position im wesentlichen bekannt ist. Als "warm start" wird z.B. eine Situation bezeichnet, in der zwar die Almanachdaten bekannt sind, Zeit und Ort aber nur ungefähr und die Ephemeridendaten gar nicht bekannt sind. Unter "cold start" wird ein Zustand verstanden, in dem noch weniger oder sogar keine der Daten bekannt bzw. vorhanden sind. In diesem Fall kann die Zeit für eine Positionserstbestimmung, die häufig als TTFF "time to first fix" bezeichnet wird, etwa 20 Minuten und mehr betragen. Eine solche Situation kann z.B. auftreten, wenn durch eine Unterbrechung der Stromversorgung die gespeicherten Daten verloren gegangen sind, wenn das GPS- Empfangsgerät lange ausgeschaltet war und/oder im ausgeschalteten Zustand an einen weit entfernten Ort verbracht wurde.

Prinzipiell könnte die Position des Empfangsgeräts kontinuierlich ermittelt werden, so daß aktuelle Daten im wesentlichen kontinuierlich aktualisiert werden könnten, allerdings wäre insbesondere der dafür notwendige Stromverbrauch des Satellitenempfangsgeräts für mobile Anwendungen zu hoch. Außerdem sind insbesondere in geschlossenen Räumen und in städtischer Umgebung die Satellitensignale so schwach, daß diese in der Regel nicht detektiert werden können.

Im Hinblick auf diese Probleme wurde A-GPS (assisted GPS) entwickelt. A-GPS kombiniert die Nutzung des satellitenbasierten GPS-Systems mit dem Empfang sogenannter Assistenzinformationen von stationären Referenzempfangsgeräten über ein Mobilfunknetz, wobei das Mobilfunknetz dazu benutzt wird, dem Empfangsgerät Hilfsdaten zu übermitteln.

Beim konventionellen GPS hat das Empfangsgerät zwei Aufgaben. Es mißt die Ankunftszeit der Signale und es liest die von den Satelliten gesendeten Daten, die u.a. Bahnparameter und Fehlerkorrekturen enthalten. Beim A-GPS werden die Satellitendaten von den stationären Referenzempfangsgeräten gelesen, die an Orten mit guter Sicht zum Himmel aufgestellt sind, so daß das mobile Empfangsgerät nur die Ankunftszeiten messen muß, wozu ein im Vergleich zu herkömmlichen Methoden um bis zu etwa 30 dB geringerer Empfangspegel ausreicht. Außerdem ist insbesondere anhand der Funkzelle (cell-ID), die das Mobiltelefon bedient, der ungefähre Ort bekannt. Dieser wird verwendet, um den Suchbereich für die Satellitensignale (Identität der sichtbaren Satelliten, ungefähre Ankunftszeit, Dopplerverschiebung) einzuschränken und somit die Messung zu beschleunigen.

Dank der hohen Empfindlichkeit wird z.T. eine Ortsgenauigkeit von bis zu wenigen Metern auch in Städten und Gebäuden erreicht. Dabei entlasten die über das GSM-Netz gesendeten Assistenzinformationen das GPS- Empfangsgerät und verkürzen die TTFF wesentlich im Vergleich zum herkömmlichen GPS-System, weil der A-GPS-Server kontinuierlich mit aktuellen Satellitenpositionen versorgt wird und die ortsbezogenen Daten in den Mobilfunknetzen sendet. Ein weiterer Vorteil liegt darin, daß die Lokalisierung häufig auch dann erfolgen kann, wenn das Empfangsgerät, das Handy oder der PDA, nur einen GPS-Satelliten empfangen kann.

In Abhängigkeit vom Ort, an dem die eigentliche Berechnung der Position stattfindet, unterscheidet man den netzwerkbasierten und den terminalbasierten Modus. Bei netzwerkbasierten A-GPS sendet das Terminal die gemessenen Ankunftszeiten (bzw. Entfernungen) der Satelliten und ein Server im Netz berechnet daraus die Position, die schließlich an das Terminal oder eine Anwendung geschickt wird. Die Hilfsdaten bestehen in diesem Falle nur in den Suchraumparametern. Beim terminalbasierten Modus erhält das Terminal die Satellitendaten und berechnet seine Position nach der Messung selbst.

Die im Rahmen des A-GPS Verfahrens angebotenen Lösungen für eine Verkürzung der TTFF wird derzeit nur von wenigen Mobilfunkanbietern angeboten und steht jeweils nur den Nutzern der jeweiligen Anbieter zur Verfügung. Auch ist das flächendeckende Vorsehen von Referenzempfangsgeräten technisch aufwendig und kostenintensiv.

### Aufgabe

Der Erfindung liegt die Aufgabe zugrunde, insbesondere bei einem cold-start eines Satellitendatenempfängers eine Verkürzung der Zeit, die bis zur einer Positionserstbestimmung vergehen kann, ("time to first fix", TTFF) auf einfache und kostengünstige Weise zu verkürzen.

### Lösung der Aufgabe

Diese Aufgabe wird erfindungsgemäß durch die Merkmale der unabhängigen Ansprüche gelöst. Bevorzugte Ausführungsformen der Erfindung sind Gegenstand der abhängigen Ansprüche.

Die Aufgabe wird durch eine erfindungsgemäße Basisstation gelöst mit einer Kommunikationseinrichtung für ein Netzwerk mit mobilen Endgeräten, wie z. B. Mobiltelefonen (z.B. Handys, Smartphones oder dgl.), mit Empfangsmitteln zum Empfang von Satellitensignalen, mittels derer die geographische Position (d.h. Ort, Höhe, Bewegungsrichtung und/oder Bewegungsgeschwindigkeit) der Empfangsmittel ermittelt werden kann, wobei die Kommunikationseinrichtung so gestaltet ist, daß sie mit den mobilen Endgeräten Daten (uni-, bi- und/oder multidirektional) austauschen kann, wobei die Basisstation so gestaltet ist, daß sie Informationsdatensätze empfangen kann, die von einem oder/mehreren mobilen Endgeräten als Referenzgeräten zur Verfügung gestellt werden, und die Basisstation einen Bestimmungsdatensatz einem mobilen Endgerät als Zielgerät zur Verfügung stellen kann, und wobei die Informationsdatensätze zumindest Satellitensignale oder davon abgeleitete Daten enthalten und der Bestimmungsdatensatz auf einem oder mehreren Informationsdatensätzen basiert, und so gestaltet ist, daß es dem Zielgerät aufgrund des Bestimmungsdatensatzes möglich ist, von Satelliten empfangene Daten auszuwerten.

Mit dem Begriff Informationsdatensatz werden die Datensätze bezeichnet, welche von einem Referenzgerät bereitgestellt werden. Solche Datensätze enthalten Daten, welche unter anderem auf empfangenen Satellitensignalen basieren bzw. von Satellitendaten abgeleitet sind und können insbesondere Almanachdaten, Bahndaten einzelner Satelliten, die Abweichungen der Zeitreferenzen, die Kennungen der empfangenen Satelliten, die Ankunftszeit der Satellitendaten bei dem Referenzgerät, eine Zeitreferenz zwischen Referenzgerät und Basisstation und/oder die geographische Position (d.h. Ort, Höhe, Bewegungsrichtung und/oder Bewegungsgeschwindigkeit) des Empfangsmittels des Referenzgeräts enthalten.

Dagegen bezeichnet der Begriff Bestimmungsdatensatz die Datensätze, die von der bzw. über die Basisstationen den Zielgeräten zur Verfügung gestellt werden. Die Bestimmungsdatensätze basieren auf einem oder mehreren Informationsdatensätzen und enthalten Daten, die es ermöglichen, daß die Positionserstbestimmung durch das Zielgerät schneller erfolgen kann, als ohne diese Daten.

Vorteile dieser Lösung sind z.B., daß es so nicht erforderlich ist, ein Netz von stationären Referenzstationen flächendeckend aufbauen zu müssen, da die mobilen Endgeräte der Nutzer eines Services selber die Referenzstationen darstellen können. Dadurch werden erhebliche Kosten für Bereitstellung und Unterhalt eines solchen Netzes von Referenzstationen gespart. Ferner ist es für einen Dienstanbieter insbesondere nicht erforderlich, mit den einzelnen Mobilfunkanbietern abzuklären, ob, unter welchen Voraussetzungen und wie einzelne Assistenzdaten, die evtl. bereits in dem jeweiligen Mobilfunknetz zur Verfügung stehen, verwendet werden können. Darüber hinaus ist es in Gebieten mit einer bestimmten Nutzerdichte möglich, in einem Bestimmungsdatensatz für einen geographischen Aufenthaltsbereich sehr genaue bzw. sehr aktuelle Assistenzdaten bereit zu stellen.

Vorzugsweise ist eine solche Basisstation derart gestaltet, daß sie in Abhängigkeit von zumindest einem bestimmten Kriterium (z.B. örtliche Nähe) einem Zielgerät einen Informationsdatensatz entweder unverändert als Bestimmungsdatensatz zur Verfügung stellt oder einen oder mehrere Informationsdatensätze weiterverarbeitet, wobei die Weiterverarbeitung in Abhängigkeit von dem- oder denselben und/oder zumindest einem anderen Kriterium erfolgt, und in weiterverarbeiteter Form als Bestimmungsdatensatz zur Verfügung stellt, wobei die jeweiligen Kriterien insbesondere anhand von folgenden einzelnen Parametern oder anhand einer Kombination der folgenden Parameter gewonnen werden können:
- Informationsdatensatz enthält Daten aus den Satellitensignalen in Rohform,
- Informationsdatensatz enthält z. B. im Referenzgerät in bestimmter Weise weiterverarbeitete Daten aus den Satellitensignalen,
- geographische Position des Empfangsmittels des Referenzgeräts,
- geographischer Aufenthaltsbereich des Empfangsmittels des Zielgerätes für das der Bestimmungsdatensatz zur Verfügung gestellt werden soll,
- Anzahl von Satelliten, von denen das Referenzgerät Satellitensignale empfangen hat,
- Identitäten der einzelnen Satelliten, von denen das Referenzgerät Satellitensignale empfangen hat,
- Empfangsqualität der Satellitensignale von den einzelnen Satelliten, die von dem Referenzgerät empfangen wurden,
- Alter des empfangenen Informationsdatensatzes,
- Art des Referenzgeräts und/oder
- Art des Empfangsmittels des Referenzgeräts.

Vorteile dieser Ausführungsform liegen insbesondere darin, daß der Datenverkehr niedrig gehalten werden kann, und als mobile Endgeräte auch Geräte verwendet werden können, die nur eine geringe Rechenleistung und/oder einen geringen Speicherplatz aufweisen. Die auf der Basisstation gespeicherten Datensätze können in einer Art Baukastensystem gespeichert werden, deren Bestandteile ständig aktualisiert werden, so daß der Nachteil der mobilen Referenzstationen verringert oder behoben werden kann, wonach die Empfangsmitteln der mobilen Endgeräte je nach Aufenthaltsort und Umgebungsbedingungen nur Signale von bestimmten Satelliten empfangen können oder Signale mancher Satelliten nur schwach oder durch Reflexionen verändert empfangen können. Dementsprechend ist es vorteilhaft möglich, in Abhängigkeit von bestimmten bekannten Parametern für unterschiedliche Zielgeräte individuell geeignete Datensätze vorzubereiten und die zu übertragenden Datensätze so klein wie möglich zu halten.

Vorzugsweise ist eine solche Basisstation ferner so gestaltet, daß der geographische Aufenthaltsbereich des Empfangsmittels des Zielgerätes ohne bereits erfolgten Satellitensignalempfang seitens des Zielgerätes aus Daten vorbestimmt werden kann, die der Basisstation von dem Zielgerät übermittelt werden, insbesondere aufgrund von Daten, die eine Zuordnung aufgrund einer der folgenden Möglichkeiten ermöglichen:
- Zuordnung zu eines geographischen Aufenthaltsbereiches aufgrund von ein oder mehreren Kennungen, die bei einer Funk-, Telefon- oder Datenverbindung zwischen einem Zielgerät und der Basisstation mit übertragen bzw. ausgetauscht werden, wie z.B. dem "Mobile Country Code", und/oder dem "Mobile Network Code" und/oder dem "Location Area Code",
- Zuordnung zu einem geographischen Aufenthaltsbereich aufgrund von dienstanbieterspezifischen Informationen, wie z.B. der Cell-ID,
- Zuordnung zu einem geographischen Aufenthaltsbereich aufgrund einer eingegebenen Zieladresse, bzw. den Zielkoordinaten,
- Zuordnung zu einem geographischen Aufenthaltsbereich aufgrund einer vom Benutzer eingegebenen Position bzw. Ortsangabe und/oder
- Zuordnung zu einem geographischen Aufenthaltsbereich aufgrund des Empfangs von Signalen, die einem geographischen Aufenthaltsbereich zuzuordnen sind, wie z.B. Kennungen von örtlich lokalisierten Funknetzen, wie z. B. WLAN-, Bluetooth-, Near-Field-, RFID- und/oder RDS-Kennungen.

Vorteile dieser Ausführungsform liegen darin, daß es so möglich ist, den zumindest ungefähren Aufenthaltsbereich eines mobilen Endgerätes zu bestimmen, so daß die Daten, die für dieses mobile Endgerät ausgewählt und/oder weiterverarbeitet werden, optimal für den geographischen Aufenthaltsbereich gewählt werden können, so daß mit Hilfe dieser Daten das mobile Endgerät die Positionserstbestimmung noch schneller durchführen kann. Durch diese Ausführungsform werden vorteilhaft auch Lösungen bereitgestellt, bei denen dies auch ohne Informationen möglich ist, die nur von den einzelnen Mobilfunkbetreibern erhalten werden können.

Vorzugsweise ist eine Basisstation derart gestaltet, daß einem mobilen Endgerät mitgeteilt wird, ob und/oder unter welchen Voraussetzungen das mobile Endgerät als Referenzgerät dienen soll und einen Informationsdatensatz bereitstellen soll, wobei die Voraussetzungen in Abhängigkeit von (bevorzugt in der Basisstation bereits gespeicherten) Satellitendaten gewählt werden können und insbesondere auf die Anzahl der von dem Empfangsmittel des Zielgeräts empfangenen Satelliten und/oder die Empfangsqualität, mit der Satelliten von dem Empfangsmittel empfangen werden, Bezug nehmen können. Ferner vorteilhaft in diesem Zusammenhang ist es, wenn das mobile Endgerät, dem mitgeteilt wird, daß es einen Informationsdatensatz bereitstellen soll, gerade als Zielgerät dient, so daß die Mitteilung zusammen mit der Zurverfügungstellung eines Bestimmungsdatensatzes erfolgt.

Dies hat den Vorteil, daß Daten insbesondere dann angefordert werden können, wenn für einen bestimmten Bereich keine oder keine ausreichenden und/oder zu alte Daten vorliegen und aufgrund des Aufenthaltsbereich des Zielgeräts angenommen werden kann, daß diese bereits auf der Basisstation gespeicherten Daten durch zusätzliche Daten von dem Zielgerät bereit gestellt, ergänzt oder aktualisiert werden können. Dadurch wird zum einen der Datenbestand der Basisstation gepflegt und zum anderen verhindert, daß unnötiger Datenverkehr (und dadurch Kosten und Energieverbrauch) durch das mobile Endgerät entstehen.

Die Aufgabe wird ferner durch ein mobiles Endgerät (wie z. B. ein Mobiltelefon oder ein Smartphone) gelöst mit einem Empfangsmittel zum Empfang von Satellitensignalen, mittels derer die geographische Position (d.h. Ort, Höhe, Bewegungsrichtung und/oder Bewegungsgeschwindigkeit) der Empfangsmittel ermittelt werden kann, und Kommunikationsmitteln zum Senden von Daten, wobei das mobile Endgerät derart gestaltet ist, daß es als Referenzgerät über seine Kommunikationsmittel einen Informationsdatensatz zur Verfügung stellen kann, der zumindest Satellitensignale oder davon abgeleitete Daten enthält, auf Basis derer optional unter Hinzuziehung anderer Informationsdatensätze anderer Referenzgeräte ein Bestimmungsdatensatz erstellt werden kann, der derart gestaltet ist, daß es einem Zielgerät aufgrund des Bestimmungsdatensatzes möglich ist, von Satelliten empfangene Daten auszuwerten.

Hierdurch ergeben sich im wesentlichen dieselben Vorteile, wie sie bei der Basisstation oben angeführt wurden.

Vorzugsweise ist ein solches mobiles Endgerät derart gestaltet, daß es als Zielgerät dienen kann, in dem Sinn, daß es über seine Kommunikationsmittel einen Bestimmungsdatensatz empfangen kann, der geeignet ist, daß es seine eigene geographische Position (d.h. Ort, Höhe, Bewegungsrichtung und/oder Bewegungsgeschwindigkeit) schneller bestimmen kann.

Vorteile dieser Lösung sind, daß eine Positionserstermittlung deutlich schneller abläuft, insbesondere der TTFF verkürzt wird, wenn dem mobilen Endgerät entsprechend der Erfindung Daten zur Verfügung gestellt werden, die es sonst erst mit den Satellitensignalen über einen längeren Zeitraum hinweg empfangen müßte und anschließend gegebenenfalls durch einen iterativen Vorgang aus diesen Daten die Positionen der empfangbaren Satelliten und schließlich die eigene Position ermitteln müßte. Mit der für sich schon vorteilhaften Zeitersparnis geht ein erheblicher Energiespareffekt einher, der gerade bei mobilen Endgeräten wichtig ist. Bezüglich anderer Vorteile und Ausführungsmöglichkeiten kann auf die oben zur Basisstation ausgeführten Vorteile und Ausführungsmöglichkeiten verwiesen werden.

Vorzugsweise ist ein solches mobiles Endgerät ferner derart gestaltet, daß es einen Informationsdatensatz nur dann im Netzwerk bereit stellt, wenn bestimmte Kriterien erfüllt sind, die insbesondere aus einem der folgenden Parameter oder einer Kombination der folgenden Parameter gewonnen werden können:
- Freigabe durch den Benutzer, daß ein Informationsdatensatz bereitgestellt werden kann,
- geographische Position des mobilen Endgerätes,
- Anzahl von Satelliten, von denen das mobile Endgerät Satellitensignale empfangen hat,
- Empfangsqualität der Satellitensignale, die von dem mobilen Endgerät empfangen wurden,
- Alter des vom mobilen Endgerät empfangenen Informationsdatensatzes,
- Art des mobilen Endgerätes,
- Art des Empfangsmittels des mobilen Endgerätes
- Anforderung eines Informationsdatensatzes durch die Basisstation oder ein anderes mobiles Endgerät, und/oder
- Voraussetzungen die von der Basisstation oder dem anderen mobilen Endgerät mit der Anfrage verbunden wurden sind erfüllt.

Diese Ausführungsform hat den Vorteil, daß zum einen der Datenverkehr niedrig gehalten, wird und damit Kosten und Energieverbrauch der mobilen Endgeräte verringert werden. Außerdem kann durch diese bevorzugte Ausgestaltung insbesondere auf datenschutzrechtliche Bestimmungen Rücksicht genommen werden, die im einzelnen zu beachten sein können. Letztlich kann es durch diese Möglichkeit in das Belieben des einzelnen Nutzers gestellt werden, ob er z.B. als Gegenleistung für eine entsprechende Unterstützung durch Bestimmungsdatensätze den anderen Nutzern eines Systems selber Informationsdatensätze zur Verfügung stellen möchte.

Vorzugsweise ist ein solches mobiles Endgerät ferner derart gestaltet, daß es einen Bestimmungsdatensatz im Netzwerk anfordert, wenn das mobile Endgerät eine bestimmte Zeit lang keine Satellitensignale empfangen hat und/oder gespeicherte Daten ein Verfallsdatum erreicht haben und/oder sich bestimmte gespeicherte Daten seit dem letzten Satellitenempfang geändert haben (wie z.B. der "mobile country code") und/oder der Benutzer zumindest einen Bestimmungsdatensatz manuell anfordert.

Dadurch wird zum einen erreicht, daß das mobile Endgerät seine Position schnell bestimmen kann, und zum anderen, daß der erforderliche Datenverkehr so gering wie möglich gehalten wird, wodurch Kosten und Energie gespart werden. Außerdem kann das mobile Endgerät automatisch auf dem aktuellen Stand gehalten werden, so daß es auch dann möglich ist, eine Positionserstbestimmung durchzuführen, wenn gerade kein Mobilfunknetz zur Verfügung steht, oder aus anderen Gründen keine Assistenzdaten erhalten werden können.

Vorzugsweise ist ein solches mobiles Endgerät ferner derart gestaltet, daß es ein Bedienungselement aufweist, durch dessen Betätigung direkt und ohne weitere nachfolgende Bedienungsschritte durch den Benutzer ein Bestimmungsdatensatz im Netzwerk angefordert wird.

Durch diese bevorzugte Ausführungsform wird ein besonderer Bedienungskomfort gewährleistet. Außerdem wird vorteilhaft ermöglicht, z.B. in Notfallsituationen einfach, unkompliziert und schnell eine Positionsbestimmung durchzuführen und ggf. eine Position den Rettungskräften mitteilen zu können.

Vorzugsweise ist ein solches mobiles Endgerät ferner derart gestaltet, daß es in einem Informationsdatensatz nicht nur Satellitenrohdaten zur Verfügung stellt sondern diese bereits aufbereitet, insbesondere in Verbindung mit zusätzlichen Daten.

Vorzugsweise ist ein solches mobiles Endgerät ferner derart gestaltet, daß es Assistenzdatensätze, die es aus einem anderen Netzwerk empfangen hat, der Basisstation als Bestimmungsdatensätze zur Verfügung stellt.

Dies hat den Vorteil, daß mit Hilfe von Daten, die anders nicht ohne weiteres zugänglich sind, bereits gespeicherte Daten anderer mobiler Endgeräte aus einem bestimmten Gebiet ergänzt werden können. Stationäre Referenzstationen sind in der Regel so positioniert, daß ein optimaler Empfang möglichst vieler Satelliten gewährleistet ist. Außerdem werden von den Mobilfunknetzbetreibern Referenzdaten in der Regel bereits passend für den jeweiligen Aufenthaltsbereich des Empfängers bereitgestellt.

Die Aufgabe wird ferner durch einen Satellitendatenempfänger gelöst mit einem Empfangsmittel und einer Schnittstelle zur Kommunikation mit einem mobilen Endgerät wie z. B. einer Kabelverbindung, einer Bluetooth- oder WLAN-Schnittstelle, der selber keine Kommunikationsmittel zur direkten Kommunikation mit der Basisstation aufweist, aber eine Kommunikation mit der Basisstation über die Schnittstelle mit dem mobilen Endgerät und dessen Kommunikationsmittel herstellen kann, wobei der Satellitendatenempfänger so gestaltet ist, daß er zusammen mit diesem Kommunikationsmittler die Merkmale eines mobilen Endgeräts gemäß der Erfindung oder eine bevorzugte Ausführungsform hiervon aufweist.

Vorteilhaft an dieser Ausführungsform ist, daß z.B. GPS-Empfänger mit einer entsprechenden Schnittstelle, die selber eine Speicher- und eine Recheneinheit aufweisen, keine Mobilfunk-Funktionalität aufweisen müssen, wodurch sie billiger hergestellt werden können. Außerdem können mit diesen Geräten auch einfachere Mobiltelefone verwendet werden können, die selber keine ausreichende Rechenleistung oder nicht genug Speicherplatz aufweisen. Schließlich ist es durch diese Lösung möglich, die Energieversorgungen für beide Geräte getrennt zu halten, so daß durch Verwendung der Navigationsfunktion nicht die Energie des Telefons verbraucht wird oder umgekehrt.

Die Aufgabe wird ferner durch ein Netzwerk gelöst mit einer Basisstation mit einer Kommunikationseinrichtung und zumindest zwei mobilen Endgeräten mit Kommunikationsmitteln und Empfangsmitteln zum Empfang von Satellitensignalen, mittels derer die geographische Position (d.h. Ort, Höhe, Bewegungsrichtung und/oder Bewegungsgeschwindigkeit) der Empfangsmittel ermittelt werden kann, wobei Kommunikationseinrichtung und Kommunikationsmittel derart gestaltet sind, daß die mobilen Endgeräten über sie mit der Basisstation Daten (uni-, bi- und/oder multidirektional) austauschen können, wobei zumindest ein mobiles Endgerät als ein Referenzgerät im Netzwerk einen Informationsdatensatz zur Verfügung stellen kann, der Satellitensignale oder davon abgeleitete Daten enthält, und wobei zumindest einem mobilen Endgerät als einem Zielgerät im Netzwerk ein Bestimmungsdatensatz zur Verfügung gestellt wird, der auf zumindest einem Informationsdatensatz basiert und derart gestaltet ist, daß es dem Zielgerät aufgrund dieses Bestimmungsdatensatzes möglich ist, von Satelliten empfangene Daten auszuwerten.

In Bezug auf Vorteile der genannten Lösung wie auch der nachfolgend genannten bevorzugten Ausführungsformen eines Netzwerks kann auf die Bemerkungen zu der beanspruchten Basisstation bzw. zu den beanspruchten mobilen Endgeräten verwiesen werden.

Vorzugsweise ist ein solches Netzwerk derart gestaltet, daß einem Zielgerät ein Informationsdatensatz unverändert als Bestimmungsdatensatz zur Verfügung gestellt wird.

Nach einer anderen bevorzugten Ausführungsform ist ein solches Netzwerk derart gestaltet, daß ein im Netzwerk zur Verfügung gestellter Informationsdatensatz weiterverarbeitet und einem Zielgerät in weiterverarbeiteter Form als Bestimmungsdatensatz zur Verfügung gestellt wird.

Nach einer anderen bevorzugten Ausführungsform ist ein solches Netzwerk derart gestaltet, daß in Abhängigkeit von zumindest einem bestimmten Kriterium einem Zielgerät ein Informationsdatensatz entweder unverändert als Bestimmungsdatensatz zur Verfügung gestellt wird oder ein oder mehrere Informationsdatensätze weiterverarbeitet werden, wobei die Weiterverarbeitung in Abhängigkeit von dem- oder denselben oder von zumindest einem anderen Kriterium erfolgt, und in weiterverarbeiteter Form als Bestimmungsdatensatz zur Verfügung gestellt werden, wobei die jeweiligen Kriterien insbesondere anhand von folgenden einzelnen Parametern oder anhand einer Kombination der folgenden Parameter gewonnen werden können:
- Informationsdatensatz enthält Daten aus den Satellitensignalen in Rohform,
- Informationsdatensatz enthält z. B. im Referenzgerät in bestimmter Weise weiterverarbeitete Daten aus den Satellitensignalen,
- geographische Position des Empfangsmittels des Referenzgeräts,
- geographischer Aufenthaltsbereich des Empfangsmittels des Zielgerätes für das der Bestimmungsdatensatz zur Verfügung gestellt werden soll,
- Anzahl von Satelliten, von denen das Referenzgerät Satellitensignale empfangen hat,
- Identitäten der einzelnen Satelliten, von denen das Referenzgerät Satellitensignale empfangen hat,
- Empfangsqualität der Satellitensignale von den einzelnen Satelliten, die von dem Referenzgerät empfangen wurden,
- Alter des empfangenen Informationsdatensatzes,
- Art des Referenzgeräts und/oder
- Art des Empfangsmittels des Referenzgeräts.

Vorzugsweise ist ein solches Netzwerk derart gestaltet, daß im Netzwerk eine Vielzahl von Informationsdatensätzen und/oder Bestimmungsdatensätzen von verschiedenen Referenzgeräten oder für verschiedene Zielgeräte gespeichert werden kann.

Vorzugsweise ist ein solches Netzwerk derart gestaltet, daß der geographische Aufenthaltsbereich des Empfangsmittels des Zielgerätes ohne bereits erfolgten Satellitensignalempfang seitens des Zielgerätes aus Daten vorbestimmt werden kann, die im Netzwerk von dem Zielgerät zur Verfügung gestellt werden, insbesondere aufgrund von Daten, die eine Zuordnung aufgrund einer der folgenden Möglichkeiten ermöglichen:
- Zuordnung zu einem geographischen Aufenthaltsbereich aufgrund von Kennungen, die bei einer Funk-, Telefon- oder Datenverbindung zwischen einem Zielgerät und dem Netzwerk mit übertragen werden wie dem "Mobile Country Code", und/oder dem "Mobile Network Code" und/oder dem "Location Area Code",
- Zuordnung zu einem geographischen Aufenthaltsbereich aufgrund von dienstanbieterspezifischen Informationen wie der Cell-ID,
- Zuordnung zu einem geographischen Aufenthaltsbereich aufgrund einer eingegebenen Zieladresse, bzw. den Zielkoordinaten,
- Zuordnung zu einem geographischen Aufenthaltsbereich aufgrund einer vom Benutzer eingegebenen Position und/oder
- Zuordnung zu einem geographischen Aufenthaltsbereich aufgrund des Empfangs von Signalen, die einer geographischen Position zuzuordnen sind, wie Kennungen von örtlich lokalisierten Funknetzen wie z. B. WLAN-, Bluetooth-, Near-Field-, RFID- oder RDS-Kennungen.
   Vorzugsweise ist ein solches Netzwerk derart gestaltet, daß einem Zielgerät zusammen mit einem Bestimmungsdatensatz mitgeteilt wird, ob und/oder unter welchen Voraussetzungen das Zielgerät nach Empfang der Satellitensignale als Referenzgerät dienen soll und einen eigenen neuen Informationsdatensatz bereitstellen soll, wobei die Voraussetzungen in Abhängigkeit von in der Netzwerk gespeicherten Daten gewählt werden können und insbesondere auf die Anzahl der von dem Empfangsmittel des Zielgeräts empfangenen Satelliten oder die Empfangsqualität mit der Satelliten von dem Empfangsmittel empfangen werden bezug nehmen können.

Die Aufgabe wird ferner durch ein Verfahren zur Verwendung mit einer Basisstation gelöst mit einer Kommunikationseinrichtung für ein Netzwerk mit mobilen Endgeräten, wie wie z. B. Mobiltelefonen oder Kfz-Navigationssystemen, mit Empfangsmitteln zum Empfang von Satellitensignalen, mittels derer die geographische Position (d.h. Ort, Höhe, Bewegungsrichtung und/oder Bewegungsgeschwindigkeit) der Empfangsmittel ermittelt werden kann, welches die folgenden Schritte umfaßt:
- Aufbauen einer ersten Datenverbindung mit einem mobilen Endgerät als Referenzgerät,
- Empfangen eines Informationsdatensatzes von dem mobilen Endgerät, der Satellitensignale oder davon abgeleitete Daten enthält,
- Aufbauen einer zweiten Datenverbindung mit einem mobilen Endgerät als Zielgerät,
- dem Zielgerät Zurverfügungstellen eines Bestimmungsdatensatzes basierend auf einem oder mehreren Informationsdatensätzen, der derart gestaltet ist, daß es dem Zielgerät aufgrund des Bestimmungsdatensatzes möglich ist, von Satelliten empfangene Daten auszuwerten.
   In Bezug auf Vorteile der genannten Lösung wie auch der nachfolgend genannten bevorzugten Ausführungsformen eines Verfahrens kann auf die Bemerkungen zu der beanspruchten Basisstation bzw. zu den beanspruchten mobilen Endgeräten verwiesen werden.

Vorzugsweise weist ein solches Verfahren ferner folgende Schritte auf:
- Bestimmen des geographischen Bereichs, in dem sich das Zielgerät befindet
- Auswählen eines oder mehrerer Informationsdatensätze, dessen oder deren Bestandteile unter Berücksichtigung des geographischen Aufenthaltsbereiches des Zielgeräts als Bestimmungsdatensatz für das Zielgerät geeignet sind,
- Entscheiden, ob ein einzelner ausgewählter Informationsdatensatz geeignet ist, unverändert als Bestimmungsdatensatz bereitgestellt zu werden, und Zurverfügungstellen des unveränderten Informationsdatensatzes als Bestimmungsdatensatz oder
- Weiterverarbeitung von Bestandteilen eines oder mehrerer Informationsdatensätze zu einem Bestimmungsdatensatz und Zurverfügungstellen dieses Bestimmungsdatensatzes,
wobei das Auswählen, Entscheiden und Weiterverarbeiten aufgrund bestimmter Kriterien erfolgt und die jeweiligen Kriterien insbesondere anhand von folgenden einzelnen Parameter oder anhand einer Kombination der folgenden Parameter gewonnen werden können:
- Informationsdatensatz enthält Daten aus den Satellitensignalen in Rohform,
- Informationsdatensatz enthält z. B. im Referenzgerät in bestimmter Weise weiterverarbeitete Daten aus den Satellitensignalen,
- geographische Position des Empfangsmittels des Referenzgeräts,
- geographischer Aufenthaltsbereich des Empfangsmittels des Zielgerätes für das der Bestimmungsdatensatz zur Verfügung gestellt werden soll,
- Anzahl von Satelliten, von denen das Referenzgerät Satellitensignale empfangen hat,
- Identitäten der einzelnen Satelliten, von denen das Referenzgerät Satellitensignale empfangen hat,
- Empfangsqualität der Satellitensignale von den einzelnen Satelliten, die von dem Referenzgerät empfangen wurden,
- Alter des empfangenen Informationsdatensatzes,
- Art des Referenzgeräts und/oder
- Art des Empfangsmittels des Referenzgeräts.

Vorzugsweise wird bei einem solchen Verfahren ferner der geographische Aufenthaltsbereich des Empfangsmittels des Zielgerätes aufgrund von Daten bestimmt, die der Basisstation von dem Zielgerät übermittelt werden, ohne bereits erfolgten Satellitensignalempfang seitens des Zielgerätes aus, insbesondere aufgrund von Daten, die eine Zuordnung aufgrund einer der folgenden Möglichkeiten ermöglichen:
- Zuordnung zu eines geographischen Aufenthaltsbereiches aufgrund von Kennungen, die bei einer Funk-, Telefon- oder Datenverbindung zwischen einem Zielgerät und der Basisstation mit übertragen werden wie dem "Mobile Country Code", und/oder dem "Mobile Network Code" und/oder dem "Location Area Code",
- Zuordnung zu einem geographischen Aufenthaltsbereich aufgrund von dienstanbieterspezifischen Informationen wie der Cell-ID,
- Zuordnung zu einem geographischen Aufenthaltsbereich aufgrund einer eingegebenen Zieladresse, bzw. den Zielkoordinaten,
- Zuordnung zu einem geographischen Aufenthaltsbereich aufgrund einer vom Benutzer eingegebenen Position und/oder
- Zuordnung zu einem geographischen Aufenthaltsbereich aufgrund des Empfangs von Signalen, die einem geographischen Aufenthaltsbereich zuzuordnen sind, wie Kennungen von örtlich lokalisierten Funknetzen wie z. B. WLAN-, Bluetooth-, Near-Field-, RFID- oder RDS-Kennungen.

Vorzugsweise weist ein solches Verfahren ferner folgenden Schritt auf:
- einem mobilen Endgerät Mitteilen, ob und/oder unter welchen Voraussetzungen das mobile Endgerät als Referenzgerät dienen soll und einen Informationsdatensatz bereitstellen soll, wobei die Voraussetzungen in Abhängigkeit von in der Basisstation bereits gespeicherten Satellitendaten gewählt werden können und insbesondere auf die Anzahl der von dem Empfangsmittel des Zielgeräts empfangenen Satelliten oder die Empfangsqualität, mit der Satelliten von dem Empfangsmittel empfangen werden, Bezug nehmen können.

Die Aufgabe wird ferner durch ein Verfahren zur Verwendung mit einem mobilen Endgerät wie z. B. einem Mobiltelefon oder einem Kfz-Navigationssystem gelöst mit einem Empfangsmittel zum Empfang von Satellitensignalen, mittels derer die geographische Position (d.h. Ort, Höhe, Bewegungsrichtung und/oder Bewegungsgeschwindigkeit) der Empfangsmittel ermittelt werden kann, welches die folgenden Schritte umfaßt:
- Empfangen von Satellitensignalen
- Aufbauen einer Datenverbindung zu einer Basisstation und/oder einem anderen mobilen Endgerät,
- Zurverfügungstellen eines Informationsdatensatzes, der zumindest Teile der empfangenen Satellitensignale oder davon abgeleitete Daten enthält, auf Basis derer optional unter Hinzuziehung anderer Informationsdatensätze anderer mobiler Endgeräte ein Bestimmungsdatensatz erstellt werden kann, der derart gestaltet ist, daß es einem Zielgerät aufgrund des Bestimmungsdatensatzes möglich ist, von Satelliten empfangene Daten auszuwerten.

In Bezug auf Vorteile der genannten Lösung wie auch der nachfolgend genannten bevorzugten Ausführungsformen eines Verfahrens kann auf die Bemerkungen zu der beanspruchten Basisstation bzw. zu den beanspruchten mobilen Endgeräten verwiesen werden.

Vorzugsweise weist ein solches Verfahren ferner folgende Schritte auf:
- Aufbauen einer Datenverbindung mit einer Basisstation und/oder einem anderen mobilen Endgerät,
- Senden einer Bestellung in einem Netzwerk, daß ein Bestimmungsdatensatz bereitgestellt werden soll,
- Empfangen eines Bestimmungsdatensatzes, und
- Auswerten von Satellitendaten aufgrund des Bestimmungsdatensatzes.

Vorzugsweise weist ein solches Verfahren ferner folgende Schritte auf:
- Prüfen nach dem Empfangen eines Bestimmungsdatensatzes, ob zusammen mit dem Bestimmungsdatensatz eine Anforderung zur Zurverfügungstellung eines Informationsdatensatzes empfangen wurde und ob mit dieser Anforderung bestimmte Kriterien verbunden wurden, gegebenenfalls
- Prüfen ob die Kriterien, die mit der Anforderung verbunden wurden, erfüllt sind und
- Zurverfügungstellen eines Informationsdatensatzes, wenn keine Anforderung zusammen mit dem Bestimmungsdatensatz empfangen wurde oder die Kriterien für eine Zurverfügungstellung erfüllt sind, wobei ein Übereinstimmen mit den Kriterien insbesondere aus einem der folgenden Parameter oder einer Kombination der folgenden Parameter zu ermitteln sein kann:
   - Freigabe durch den Benutzer, daß ein Informationsdatensatz bereitgestellt werden kann,
   - geographische Position des mobilen Endgerätes,
   - Anzahl von Satelliten, von denen das mobile Endgerät Satellitensignale empfangen hat,
   - Empfangsqualität der Satellitensignale, die von dem mobilen Endgerät empfangen wurden,
   - Alter des vom mobilen Endgerät empfangenen Informationsdatensatzes,
   - Art des mobilen Endgerätes,
   - Art des Empfangsmittels des mobilen Endgerätes
   - Anforderung eines Informationsdatensatzes durch die Basisstation oder ein anderes mobiles Endgerät, und/oder
   - Voraussetzungen die von der Basisstation oder dem anderen mobilen Endgerät mit der Anfrage verbunden wurden sind erfüllt.

Vorzugsweise weist ein solches Verfahren ferner folgende Schritte auf:
- Prüfen, ob auf dem mobilen Endgerät ein Bestimmungsdatensatz oder ein Satz vergleichbarer Daten gespeichert ist, welcher es dem mobilen Endgerät ermöglicht, von Satelliten empfangene Daten auszuwerten, und
- Bestellen eines Bestimmungsdatensatzes im Netzwerk, wenn keine solchen Daten gespeichert sind.

Vorzugsweise erfolgt bei einem solchen Verfahren die Prüfung anhand des Alters oder des Speicherdatums eines gespeicherten Bestimmungsdatensatzes und ein Bestimmungsdatensatz wird nur dann bestellt, wenn das Speicherdatum länger als eine bestimmte Zeit zurückliegt oder das Alter ein bestimmtes Alter übersteigt.

Vorzugsweise erfolgt bei einem solchen Verfahren die Prüfung anhand eines zusammen mit einem Bestimmungsdatensatz gespeicherten Verfallsdatum.

Vorzugsweise wird bei einem solchen Verfahren ein Bestimmungsdatensatz im Netzwerk bestellt, wenn ein Benutzer ein bestimmtes Bedienungselement betätigt.

Vorzugsweise werden bei einem solchen Verfahren die empfangenen Satellitensignale vor einer Bereitstellung im Netzwerk im mobilen Endgerät insbesondere in Verbindung mit zusätzlichen Daten aufbereitet und dann in dieser aufbereiteten Form als Informationsdatensatz bereitgestellt.

Vorzugsweise weist ein solches Verfahren ferner folgende Schritte auf:
- Empfangen von Assistenzdatensätzen aus einem anderen Netzwerk,
- Bereitstellen der Assistenzdatensätzen als Bestimmungsdatensätze.

Die Aufgabe wird ferner durch ein Verfahren zur Verwendung in einem Netzwerk bestehend aus zumindest einer Basisstation und zumindest zwei mobilen Endgeräten, wie z. B. Mobiltelefonen oder Kfz-Navigationssystemen, mit Empfangsmitteln zum Empfang von Satellitensignalen, mittels derer die geographische Position (d.h. Ort, Höhe, Bewegungsrichtung und/oder Bewegungsgeschwindigkeit) der Empfangsmittel ermittelt werden kann gelöst, bei dem ein Verfahren gemäß der Erfindung oder eine bevorzugte Ausführungsform hiervon und/oder ein Verfahren gemäß der Erfindung oder eine bevorzugte Ausführungsform hiervon angewendet wird.

In Bezug auf Vorteile der genannten Lösung kann auf die Bemerkungen zu der beanspruchten Basisstation bzw. zu den beanspruchten mobilen Endgeräten verwiesen werden.

Computerprogrammprodukt, insbesondere auf einem computerlesbaren Speichermedium gespeichert, welches computerlesbare Instruktionen aufweist, welche, wenn auf einem geeigneten System geladen und ausgeführt, Verfahren gemäß der Erfindung oder einer bevorzugten Ausführungsform hiervon ausführt.

### Kurze Beschreibung der Zeichnung

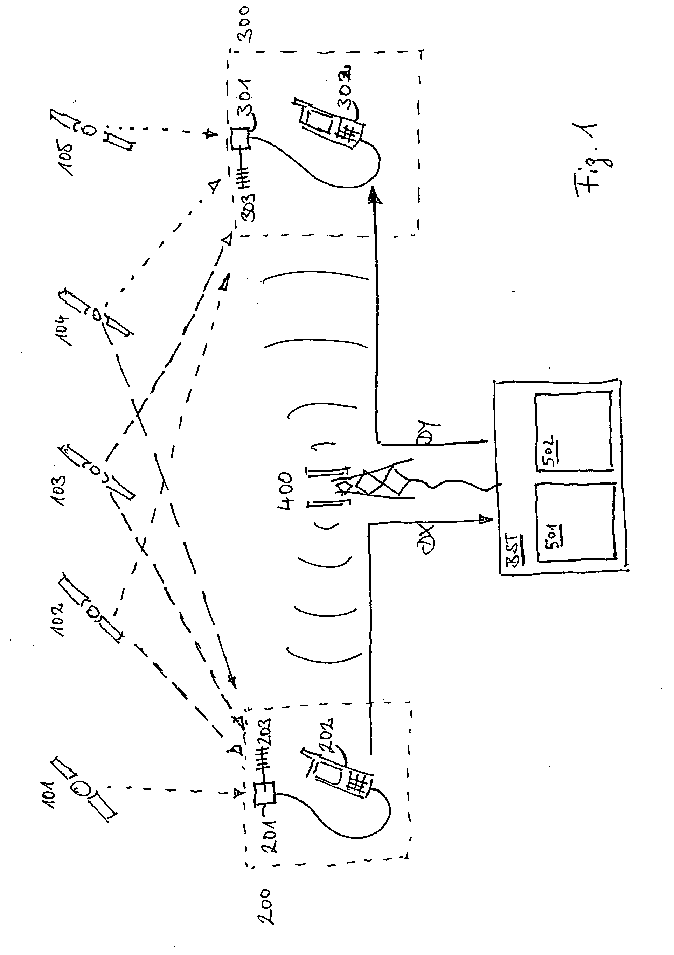

- Fig. 1: zeigt schematisch ein Netzwerk gemäß einer bevorzugten Ausführungsform mit einer Basisstation, einem mobilen Endgerät als Referenzgerät, einem mobilen Endgerät als Zielgerät und einem Kommunikationsmittel.

### Detaillierte Beschreibung der Erfindung

Fig. 1 zeigt ein bevorzugtes Netzwerk mit einer Basisstation BST, einem mobilen Endgerät als Referenzgerät 200, einem mobilen Endgerät als Zielgerät 300 und einer Kommunikationseinrichtung 400 entsprechend der Erfindung. Es können jedoch mehrere mobile Endgeräte 200, 300 als Referenzgeräte 200 und/oder mehrere mobile Endgeräte 200, 300 als Zielgeräte 300 vorhanden sein, und einzelne oder alle mobile Endgeräte 200, 300 können sowohl als Referenzgerät 200 als auch als Zielgerät 300 dienen. Weiterhin sind in Fig. 1 Satelliten 101, 102, 103, 104, 105 dargestellt. Gemäß der vorliegenden bevorzugten Ausführungsform ist eine geographische Position (d.h. Ort, Höhe, Bewegungsrichtung und/oder Bewegungsgeschwindigkeit) von zumindest dem mobilen Endgerät 200, 300 als Zielgerät 300 mit Hilfe eines (nachfolgend näher zu beschreibenden) Bestimmungsdatensatz DY zu ermitteln.

Eine Basisstation BST umfaßt vorzugsweise eine Recheneinheit 501 und zumindest eine Speichereinheit 502 und kann je nach Situation als Server oder als Client dienen.

Eine Kommunikationseinrichtung 400 einer Basisstation BST umfaßt vorzugsweise eine Verbindung der Basisstation BST mit einem Mobilfunknetz, das von einer Vielzahl von mobilen Endgeräten 200, 300 genutzt werden kann. Denkbar sind aber auch Verbindungen zu anderen Funknetzen, z.B. solchen mit Hochseeschiffen oder anderen mobilen Einrichtungen in Bereichen, in denen keine Mobilfunknetze bestehen. Die Basisstation BST kann selber zum Beispiel über das Internet, über direkte Datenleitungen oder wiederum über Funknetze mit den Telefon- bzw. Datennetzen ein oder mehrerer Mobilfunkanbieter verbunden sein, so daß die Basisstation BST mit mobilen Endgeräten 200, 300 in unterschiedlichen Telefon- und/oder anderen Funknetzen in Verbindung treten kann. In anderen Worten sind ein-, bi- oder mehrdirektionale Verbindungen bzw. Datenaustausch zwischen der Basisstation BST und den mobilen Endgeräten 200, 300 möglich.

Mobile Endgeräte 200, 300 umfassen vorzugsweise Mobiltelefone 202, 302 mit zumindest einem (internen und/oder externen) bevorzugt als GPS-Empfänger ausgestalteter Empfänger 201, 301 mit zumindest einem entsprechenden Empfangsmittel 203, 303, können aber auch Navigationssysteme in Kraftfahrzeugen, auf Schiffen oder in Flugzeugen sein. Die Empfänger 201, 301 bzw. die Empfangsmittel 202, 203 sind geeignet, Satellitensignale zu empfangen, die von einem oder mehreren Satelliten 101-105 gesendet werden, die zu einem Satellitensystem (oder mehreren Satellitensystemen) zur Ortsbestimmung gehören, z.B. NAVSTAR-GPS Satelliten. Mobile-Endgeräte 200, 300, welche Satellitensignale dieser GPS Satelliten zu privaten Zwecken nutzen wollen, müssen z. B. einen Empfänger 201, 301 bzw. ein Empfangsmittel 203, 303 aufweisen, welches bevorzugt Signale auf einer Frequenz von 1,57542 GHz empfangen kann.

Wie vorangehend erläutert läßt sich mit den (bevorzugt als GPS-Signalen ausgestalteten) Satellitensignalen von den bevorzugt als GPS-Satelliten ausgebildeten Satelliten 101-105 sich nicht nur die Position (Längengrad und/oder Breitengrad, Höhe über Meeresspiegel), sondern darüber hinaus auch die Geschwindigkeit des Empfangsmittels 203, 303 bestimmen: Durch die relative Bewegung des Empfangsmittels 203, 303 zu den Satelliten 101-105, ergibt sich insbesondere durch den Doppler-Effekt eine Verschiebung des Signals und da die Geschwindigkeit der Satelliten 101-105 bekannt ist, läßt sich die Geschwindigkeit des Empfangsmittels 203, 303 berechnen bzw. ermitteln.

Damit ein GPS-Empfänger immer zu mindestens vier Satelliten 101-105 Kontakt hat, werden im GPS System insgesamt mindestens 24 Satelliten auf 6 Bahnen eingesetzt, welche die Erde jeweils in einer Höhe von etwa 20.200 km etwa alle 12 Stunden einmal umkreisen. Um Ausfällen der Satelliten 101-105 vorzubeugen wurden zusätzliche (Reserve-) Satelliten in den Orbit gebracht, so daß sich im Jahr 2005 31 Satelliten im Umlauf befanden. Auf jeder der 6 Bahnebenen befinden sich mindestens vier Satelliten 101-105. Jede Bahnebene ist um etwa 55° gegen die Äquatorebene geneigt, und um die Erdachse gegen die benachbarten Bahnebenen um jeweils etwa 60° verdreht.

Die bevorzugt als GPS-Satelliten ausgebildeten Satelliten 101-105 weisen zwei Sender auf, die insbesondere in Spreizbandtechnik arbeiten und auf den GPS-Frequenzen von 1,57542 GHz (sogenannte L1-Frequenz) und 1,2276 GHz (sogenannte L2-Frequenz) senden. Die GPS-Signale werden bevorzugt in Phasenmodulation auf diese Trägerfrequenzen aufmoduliert. Mit der L2-Frequenz wird im wesentlichen nur der verschlüsselte P/Y-Code ("Precision/encrypted" im Deutschen: präzisionsverschlüsselt) für die militärische Nutzung gesendet. Der P/Y-Code wird ebenfalls über die L1-Frequenz gesendet.

Zusätzlich transportiert die L1-Frequenz aber auch den C/A-Code ("Coarse/Acquisition" im Deutschen: Groberfassung) für die zivile Nutzung und eine Navigationsnachricht.

Der gesendete C/A-Code ist eine pseudozufällige, 1023 bit langer Code, der bei jedem Satelliten eindeutig ist. Der C/A-Code wird mit 1,023 MHz ausgestrahlt also 1000 mal pro Sekunde. Durch dieses "pseudozufällige Rauschen" (PRN; "pseudorandom noise") sind die Signale weniger anfällig gegenüber Interferenzen und alle Satelliten 101-105 können bevorzugt auf der gleichen oder einer sehr nahen Frequenz senden.

Dabei weist die Navigationsnachricht einen Datenrahmen auf, der insbesondere 25 Frames genannte Datenpakete aufweist, die wiederum 5 Subframes aufweisen. Jeder Subframe weist insbesondere 10 Datenwörter auf, die jeweils 30 Bit umfassen. Die Navigationsnachricht wird mit einer Übertragungsrate von etwa 50 bit/s gesendet. Demnach benötigt ein Datenwort etwa 0,6 s für die Übertragung. Daraus folgt für die Länge eines Subframes 300 Bit und einer Übertragungsdauer von etwa 6 s sowie für einen Frame 1500 bit und etwa 30 s. Das gesamte GPS-Datensignal umfaßt insbesondere 37.500 bit und benötigt eine Übertragungszeit von etwa 12,5 Minuten.

Die ersten drei Subframes jedes der 25 Frames enthalten bei jedem Satelliten insbesondere jeweils u.a. die Parameter der Ephemeriden (Bahndaten), Informationen zur Aktualität der Ephemeriden und Uhrenkorrekturwerte. Da diese ersten drei Subframes bei jedem Satelliten gleich sind, werden somit etwa alle 30 Sekunden die wichtigsten Daten zur Positionsbestimmung gesendet.

Insbesondere zur Initialisierung der Geräte werden des Weiteren bevorzugt auch der sogenannte "Almanach" übertragen. Jeder der 24 Satelliten des GPS-Systems sendet die Almanachdaten aller Satelliten verteilt auf die Subframes 4 und 5 aller Frames. Die Almanachdaten enthalten insbesondere Informationen über die Bahnparameter aller Satelliten, deren technischen Zustand, Identifikationsnummern, u.s.w. Aus den Almanachdaten kann der Empfänger 201, 301 ersehen bzw. ableiten, welche Satelliten sich voraussichtlich in seinem Sichtfeld befinden, so daß er seine Suche auf diese Satelliten beschränken kann. Für die Übertragung der Almanachs werden etwa über zwölf Minuten benötigt.

In den verwendeten Frequenzbereichen breitet sich die elektromagnetische Strahlung ähnlich wie sichtbares Licht fast geradlinig aus, wird dabei jedoch durch das Wetter (Bewölkung, Niederschlag) nur wenig beeinflußt. Deshalb, und durch die geringe Sendeleistung der GPS-Satelliten, ist für den besten Empfang der Signale eine direkte Sichtverbindung zum Satelliten erforderlich. In Gebäuden, Tunneln, Tiefgaragen etc. war ein GPS-Empfang bis vor kurzem nicht möglich. Auch zwischen hohen Gebäuden kann es durch mehrfach reflektierte Signale (Mehrwege-Effekt) zu Ungenauigkeiten kommen. Zudem ergeben sich z.T. große Ungenauigkeiten bei ungünstigen Satellitenkonstellationen, z.B. wenn nur drei dicht beieinander stehende Satelliten aus einer Richtung zur Positionsberechnung zur Verfügung stehen. Neue Empfängertechnologien ermöglichen jedoch nun auch Anwendungen in Problembereichen.

Derzeit sind die folgenden zwei Dienstklassen erhältlich: SPS (Standard Positioning Service) ist für jedermann verfügbar und erreichte ursprünglich eine Genauigkeit von etwa 100 m (in 95% der Messungen). Seit Mai 2000 wurde die künstliche Ungenauigkeit vom US-Militär abgeschaltet, seitdem beträgt die Genauigkeit etwa 15 m. PPS (Precise Positioning Service) ist der militärischen Nutzung vorbehalten und ist ursprünglich auf eine Genauigkeit von etwa 22 m (in 95% der Messungen, die aktuelle Genauigkeit ist unbekannt) ausgelegt worden. Die Signale für PPS werden verschlüsselt ausgestrahlt.

Eine vorteilhafte Gestaltung eines mobilen Endgeräts 200, 300, welches in der Lage ist, der Basisstation BST einen Informationsdatensatz DX zur Verfügung zu stellen, kann z.B. dadurch geschaffen werden, daß das mobile Endgerät 200, 300 einen Speicher, in dem die Daten gespeichert werden, die von einem oder mehreren Satelliten 101-105 empfangen werden, und einer Recheneinheit aufweist, welche die empfangenen Daten auswertet bzw. verarbeitet. Die ausgewerteten bzw. verarbeiteten Daten können dann bevorzugt erneut gespeichert werden. Die gespeicherten Daten - seien es die Rohdaten, die als Satellitensignale empfangen wurden, seien es die ausgewerteten bzw. verarbeiteten Daten - können von dem mobilen Endgerät 200, 300 aus dem Speicher ausgelesen werden und über ein Kommunikationsmittel 202, 302 zum Beispiel der Basisstation BST als Informationsdatensatz DX zur Verfügung gestellt werden.

Ein Informationsdatensatz DX enthält dabei bevorzugt zumindest Bestandteile von Almanachdaten, Ephemerisdaten und/oder Identifikationsdaten für einzelne empfangene Satelliten 101-105. Ferner enthält ein Informationsdatensatz DX vorzugsweise Angaben über die geographische Position des Satellitenempfängers 201, 301 bzw. dessen Empfangsmittels 203, 303, Angaben über Empfangsqualität der Satellitensignale von einzelnen Satelliten 101-105 und/oder Zeitreferenzen etc. Wurde von dem Referenzgerät die ganze (typischerweise 25 Frames umfassende) Navigationsnachricht empfangen, kann es alle in der Navigationsnachricht enthaltenen Daten unter Beibehaltung des Datenformats im Rahmen des Informationsdatensatzes DX zur Verfügung stellen. Insbesondere sind dabei die Subframes 1 - 3 eines Frames (für verschiedene Satelliten 101-105) und die Subframes 4 und 5 aller Frames von Interesse. Genauso ist es aber auch möglich, daß nur Informationen in Bezug auf einzelne Satelliten 101-105 zur Verfügung gestellt werden.

Die Kommunikationsmittel 202, 302 der mobilen Endgeräte 200, 300 ermöglichen es, z.B. über die Kommunikationseinrichtung 400 einer Basisstation BST mit dieser in Verbindung zu treten und Daten DX zu senden bzw. vorteilhafterweise auch auszutauschen. Solche Kommunikationsmittel 202, 302, vorzugsweise die Mobilfunkempfänger bzw. -sender, ermöglichen es, daß mit einem mobilen Endgerät 200, 300 über das Mobilfunknetz Daten ausgetauscht werden können. Bevorzugt sind folgende mobilfunkspezifische Datenprotokolle: "wireless application protocol" (WAP), "general packet radio service" (GPRS), "circuit switched data" (CSD), "high speed circuit switched data" (HSCSD), SMS, UMTS, CDMA, WCDMA oder andere Standards. Kommunikationsmittel könnten aber auch WLAN oder Bluetoothelemente sein, welche es den mobilen Endgerät 200, 300 ermöglichen, über WLAN und/oder Bluetooth mit einer Basisstation oder anderen mobilen Endgeräten 200, 300zu kommunizieren.

Wie gezeigt wurde können Daten über verschiedene Protokolle übertragen werden. Bevorzugt sind zum einen solche Datenverbindungen, welche eine möglichst schnelle Übertragung von Daten (bevorzugt von mindestens etwa 10 kbit/s) ermöglichen. Unter mehreren verfügbaren Datenübertragungswegen können bevorzugt solche bevorzugt werden, die für den angestrebten Zweck bzw. Datenmenge die geringsten Kosten verursachen. So gibt es unterschiedliche Berechnungsmethoden, die zum Teil Kosten pro Datenpaket mit einer bestimmten Größe, pro Zeiteinheit während der eine Datenverbindungen besteht oder pro Datenmenge oder pro Abruf verursachen. Sollten mehrere Datenübertragungswege zwischen der Basisstation und einem einzelnen mobilen Endgerät 200, 300 zur Verfügung stehen, kann die Basisstation derart gestaltet sein, daß sie im Einzelfall eine nach diesen Aspekten besonders geeignete Variante auswählt.

Die Empfänger 201, 301 der mobilen Endgeräte 200, 300 umfassen bevorzugt Antennen 203, 303, welche geeignet sind, Satellitensignale zu empfangen. Eine Positionsbestimmung ist zunächst nur für die Position der Antenne 203, 303 möglich, die nicht notwendig identisch mit der Position des Empfängers (bevorzugt des GPS-Empfängers) 201, 301 identisch sein muß.

In der in Fig. 1 dargestellten Konstellation empfängt das Referenzgerät 200 Signale von vier Satelliten 101, 102, 103, 104 und das Zielgerät 300 empfängt von ebenfalls vier (zum Teil anderen) Satelliten 102, 103, 104, 105 Signale. Wie bereits einleitend festgestellt wurde befinden sich insbesondere für das GPS System insgesamt mindestens 24 Satelliten auf sechs Umlaufbahnen um die Erde, derzeit (Stand 2005) zusammen mit Reservesatelliten sogar 31 Satelliten. Daher empfängt ein Satellitenempfänger 201, 301, der einen guten Blickkontakt zum Himmel hat, durchschnittlich, Signale von acht Satelliten.

Aufgrund von Gebäudeabschattungen, Wetterbedingungen oder in Abhängigkeit von dem Aufenthaltsbereich kann es aber auch sein, daß wie in Fig. 1 dargestellt weniger Satelliten 101-105 sichtbar sind und ein mobiles Endgerät 200, 300 z.B. von fünf Satelliten, die sich grundsätzlich im Empfangsbereich befinden, nur von vier Satelliten 101-105 Daten empfangen kann.

Nach dem Empfang der Satellitendaten kann das Referenzgerät 200, je nach Gerätetyp in der Lage sein, die empfangen Satellitendaten selber weiter zu verarbeiten und/oder (z. B. in Ermangelung eigener ausreichender Rechenleistung) die Satellitendaten im wesentlichen bzw. weitgehend unverändert als Informationsdaten DX der Basisstation BST zur Verfügung zu stellen bzw. kommuniziert.

Vorzugsweise ist das Referenzgerät 200 in der Lage, die empfangenen Satellitendaten derart auszuwerten, daß es seine eigene Position ermitteln kann, und stellt dann die aktuellen Ephemeriden der einzelnen Satelliten 101, 102, 103, 104, und/oder Zusatzinformationen, wie z.B. die Empfangszeit, der Empfangsort und/oder zumindest einen Teil der Almanachdaten, im Netzwerk als Informationsdatensatz DX zur Verfügung bzw. übermittelt diese an die Basistation BST. Andere Zusammenstellungen eines Informationsdatensatzes DX wurden bereits weiter oben beschrieben.

Die Basisstation BST ist vorzugsweise derart gestaltet, daß sie erkennen kann, ob der Informationsdatensatz DX ein oder mehrere Satellitensignale enthält, die nicht weiterverarbeitet wurden und im wesentlichen in Rohform vorliegen, oder ob die Daten bereits in den jeweiligen Referenzgeräten 200 verändert wurden. Sie kann also unterschiedliche Formate der empfangenen Informationsdatensätze DX erkennen und (weiter-) verarbeiten. Dabei können je nach Ausführungsform die Informationsdatensätze DX zunächst unverändert gespeichert werden und zu einem späteren Zeitpunkt vorzugsweise in Abhängigkeit von Daten, die von einem Zielgerät 300 empfangen wurden, weiterverarbeitet werden. Genauso können die Informationsdatensätze DX gleich nach ihrem Empfang analysiert, in ihre Bestandteile zerlegt werden und/oder je nach Bedarf nur einzelne Bestandteile (z.B.

Bahndaten einzelner Satelliten 101-105 gespeichert werden, und zwar vorzugsweise jeweils mit einer Information betreffend den Zeitpunkt, wann sie empfangen wurden, dem Ort, an dem sich das Empfangsmittel 203 befand, als die Satellitendaten empfangen wurden, und/oder anderen Daten. Andere Bestandteile, die nicht benötigt werden, brauchen dagegen nicht gespeichert werden. So können in der Basisstation BST z. B. bereits aktuelle Informationen über bestimmte Satelliten 101-105 gespeichert sein, so daß aus einem Informationsdatensatz DX nur noch Daten über andere Satelliten 101-105 benötigt werden.

Bestimmte Daten verlieren mit der Zeit an Aktualität bzw. sind nach Ablauf einer speziellen (vorbestimmten bzw. vorbestimmbaren) Zeit nicht mehr verwendbar, so daß Daten für bestimmte Satelliten durch aktuellere Daten ersetzt werden können bzw. müssen, und Daten für andere Satelliten können unter bestimmten Bedingungen zunächst beibehalten werden, auch wenn sie ein bestimmtes Alter erreicht haben, z.B. weil für sie noch keine aktuellen Daten empfangen wurden. Ebenso kann in die Entscheidung, ob und wie ein Datensatz gespeichert wird, einfließen von welchem Empfänger 201 der Datensatz gespeichert wurde. So besitzen manche ältere Empfänger 201 zum Beispiel eine niedrigere Empfindlichkeit, so daß Daten von Satelliten 101-105, die von diesen Geräten gerade noch empfangen werden, für andere Empfänger 201 gut zu empfangen sind.

Im gezeigten Beispiel können dem Zielgerät 300 insbesondere Bestimmungsdaten (bevorzugt die Ephemeridendaten) für die Satelliten 101, 102, 103, 104 zur Verfügung gestellt werden und zusätzlich andere Bestimmungsdaten (bevorzugt Ephemeridendaten) von anderen Satelliten 105, wenn diese auf bzw. in der Basisstation BST bereits gespeichert bzw. vorhanden sind. Sollte mit einer Bestellung eines Bestimmungsdatensatzes DY seitens des Zielgerätes 300 bereits mitgeteilt worden sein, welche Satelliten 102-105 sich gerade in seinem Sichtfenster befinden, können die Bestimmungsdaten (bevorzugt die Ephemeridendaten) auf die drei Satelliten 102, 103, 104 beschränkt werden, die sich in diesem Sichtfenster befinden. Zusätzlich oder alternativ können dem Zielgerät 300 auch (zumindest eien Teil der) Almanachdaten bezüglich weiterer Satelliten 102-105, die sich in seinem Sichtfeld befinden oder befinden könnten, zur Verfügung gestellt bzw. übersandt werden.

Unabhängig von der Frage wie die Daten, die im Rahmen von Informationsdatensätzen DX empfangen wurden, gespeichert werden, kann auch die Zusammensetzung der Bestimmungsdatensätze DY, die dem Zielgerät 300 zur Verfügung gestellt bzw. übermittelt werden, von bestimmten Kriterien abhängig gemacht werden.

Zum Beispiel können von dem Zielgerät 300 zusammen mit einer Anfrage nach einem Bestimmungssatz DY bestimmte zusätzliche Daten übermittelt werden. Solche Daten können zum Beispiel Angaben über den geographischen Aufenthaltsbereich eines Empfangsmittels 303 enthalten, wodurch in der Basisstation BST Daten ausgewählt werden können, die von Referenzgeräten 200 stammen, die sich ungefähr in oder in der Nähe von demselben Bereich (bevorzugt in einer Entfernung von weniger als etwa 200 km, bevorzugter von weniger als etwa 100 km, am bevorzugtesten von weniger als etwa 10 km von dem Empfangsmittel 303 des Zielgerätes 300) aufgehalten haben aus dem auch die Anfrage des Zielgerätes 300 stammt.

Andererseits kann zum Beispiel aufgrund von früheren Anfragen durch das Zielgerät 300 oder durch individuelle Daten, die für einen bestimmten Nutzer gespeichert werden, erkannt werden, welches Zielgerät 300 mit einem Bestimmungsdatensatz DY zu versorgen ist und mit welcher technischen Konfiguration das Zielsystem bzw. Zielgerät 300 ausgestattet ist, so daß zum Beispiel bekannt ist, welche Empfangsqualität durch den Empfänger 301 bzw. das Empfangsmittel 303 erzielt werden kann und ob das Zielgerät 300 ausreichend Rechen- oder Speicherkapazitäten zur Verfügung hat. Solche Daten können natürlich auch von dem Zielgerät 300 zusammen mit einer Anfrage nach einem Bestimmungsdatensatz DY der Basisstation BST übermittelt werden.

Weiterhin ist es möglich, falls erkannt wird, daß der Empfänger 301 bzw. das Empfangsmittel 303 des Zielgerätes 300 nur eine schlechte Empfangsqualität aufweist, Daten für bestimmte Satelliten 102-105, von denen bekannt ist, daß sie in dem Zielgebiet nur schlecht zu empfangen sind, nicht mit zu übermitteln. Genauso kann es sinnvoll sein, wenn bekannt ist, daß das Zielgerät 300 .B. nur beschränkte Speicherkapazitäten aufweist, dem Zielgerät nur Daten für Satelliten 102-105 zur Verfügung zu stellen, die sich gerade im Empfangsbereich befinden d.h. für das Zielgerät 300 "sichtbar" sind, also keine Daten "auf Vorrat" zu senden.

Natürlich ist es auch möglich, einen Bestimmungsdatensatz DY, der einen im wesentlichen unveränderten Informationsdatensatz DX aufweist, bereitzustellen, wenn insbesondere bekannt ist, daß sich das Zielgerät 300 in der Nähe des Referenzgerätes 200 befindet (bevorzugt in einer Entfernung von weniger als etwa 200 km, bevorzugter von weniger als etwa 100 km, am bevorzugtesten von weniger als etwa 10 km von dem Empfangsmittel 303 des Zielgerätes 300) und bevorzugt der Informationsdatensatz DX von dem Referenzgerät 200 erst vor kurzer Zeit empfangen wurden.

Wie bereits dargestellt wurde, ist es möglich anhand von Kenntnissen über den genauen oder ungefähren Aufenthaltsbereich eines Zielgerätes 300 aus verschiedenen Datensätzen für das jeweiligen Zielgerät 300 passende bzw. ausgewählte Daten auszuwählen bzw. bereitzustellen. Besonders vorteilhaft für diesen Zweck sind Daten, welche die jeweiligen Mobilfunkbetreiber aus der sogenannten Cell-ID entnehmen können. Diese Informationen stehen aber in der Regel nur den jeweiligen Netzbetreibern zur Verfügung, so daß eine Verwendung dieser Daten für Dritte nicht immer möglich ist.

Eine ungefähre Bestimmung des Aufenthaltsbereichs kann aber auch auf folgende andere Weisen bestimmt werden, die im Einzelfall vorteilhaft sein können. Zum Beispiel werden zusammen mit einer Verbindung zu einem Mobiltelefon auch der sogenannte "Mobile Country Code", der "Mobile Network Code" und/oder der "Location Area Code" mit übertragen. Aus diesen allgemein zur Verfügung stehenden Codes kann der Aufenthaltsbereich auf ein Land oder ein bestimmtes Gebiet eingeschränkt werden und zumindest auf einige 100 Kilometer genau bestimmt werden.

Genauere Daten können sich zum Beispiel aus einem von dem Benutzer z.B. per Hand eingegebenen Position und/oder Navigationsziel ermitteln lassen, zumindest dann, wenn das Ziel nicht ebenfalls einige 100 Kilometer von dem Aufenthaltsbereich des Zielgerätes 300 entfernt ist. Noch genauer kann der Aufenthaltsbereich ermittelt werden, wenn dieser dem Benutzer bekannt ist und er diese Position manuell eingibt.

Eine weitere Möglichkeit zur Bestimmung eines Aufenthaltsbereichs, ergibt sich aus dem Empfang von Signalen, die einem geographischen Aufenthaltsbereich zuzuordnen sind. Diese können z.B. Kennungen von Funknetzen sein, die nur örtlich verfügbar sind. In Frage kommen Kennungen von WLAN (wireless local area network oder Bluetooth- oder Near-Field-Netzen, RFID-Kennungen oder RDS-Signalen. Die RDS Kennung (RDS steht für "Radio Data System" wird zusammen mit vielen Radiosendern gesendet und ermöglicht es, den jeweiligen Radiosender zu identifizieren und dem Höher anzuzeigen. Zusammen mit den anderen RDS Daten wird ein interner Identifikationscode gesendet, der eine vierstellige Hexadezimalzahl aufweist und die ungefähre Identifikation des Senders und damit eines Sendegebiets ermöglicht. Bevorzugt ist daher eine Gestaltung der mobilen Endgeräte 200, 300, die es ermöglicht, daß solche Funksignale von dem mobilen Endgerät 200, 300 empfangen werden können.

Weiterhin bevorzugt ist es, wenn die Vorrichtungen (mobile Endgeräte 200, 300, Basisstation BST, etc.) derart gestaltet sind, daß einem mobilen Endgerät 200, 300 durch die Basisstation BST mitgeteilt werden kann, ob und unter welchen Voraussetzungen das mobile Endgerät 200, 300 der Basisstation BST einen Informationsdatensatz DX übermitteln soll. Eine solche Mitteilung kann z.B. zusammen bzw. in Zusammenhang mit der Zurverfügungstellung eines Bestimmungsdatensatzes DY erfolgen. Eine entsprechende Anforderung kann aber auch unabhängig von einem Bestimmungsdatensatz DY angefordert werden, z.B. wenn sich ein mobiles Endgerät 200, 300 bereits in Benutzung befindet und andere Daten von der Basisstation BST erhält, z.B. Richtungs- bzw. Weginformationen, wie ein bestimmtes Ziel ausgehend von der aktuellen Position erreicht werden kann. Natürlich kann ein Informationssatz DX auch gänzlich ohne eine Anfrage seitens des mobilen Endgerätes 200, 300 von der Basisstation BST angefragt werden. Eine solche Anfrage könnte eine Auswahl von Daten betreffen (z.B. für bestimmte Satelliten), oder von geeigneten Kriterien abhängig gemacht werden, die bereits oben an anderer Stelle genannt wurden.

Vorteilhaft wird von einem mobilen Endgerät 200, 300 nur dann ein Informationsdatensatz DX bereitgestellt, wenn bestimmte Voraussetzungen gegeben sind. Dadurch ist es möglich, z.B. mobile Endgeräte 200, 300 bereitzustellen, mit denen ein Nutzer zwar die Möglichkeit hat, Bestimmungsdatensätze DY zu empfangen aber seinerseits nicht verpflichtet ist, einen Informationsdatensatz DX bereitzustellen. Eine Freigabe durch den Benutzer könnte selektiv - z.B. je nach Gestaltung des mobilen Endgerätes 200, 300 - in jedem einzelnen Fall gefordert werden oder pauschal für einen Teil oder im wesentlichen alle Fälle erteilt werden.

Von der Einwilligung eines Nutzers zur Bereitstellung von Informationsdatensätzen DX kann auch die Möglichkeit für diesen Nutzer abhängig gemacht werden, selber Bestimmungsdatensätze DX empfangen zu können. Diese Einschränkung kann z.B. für Notrufe außer Kraft gesetzt werden, so daß ein Nutzer, der zwar nicht eingewilligt hat, daß von seinem mobilen Endgerät 200, 300 aus Informationsdatensätze DX bereit gestellt werden, trotzdem Bestimmungsdatensätze DY empfangen kann, wenn diese zusammen mit einem Notruf angefordert werden.

Bei einer weiteren bevorzugten Ausführungsform ist es möglich, daß ein mobiles Endgerät 200, 300, wenn bestimmte Voraussetzungen erfüllt sind, einen Bestimmungsdatensatz DY anfordert bzw. anfordern kann. Dies kann zum Beispiel jedesmal dann erfolgen, wenn das mobile Endgerät 200, 300 versucht, seine eigene Position zu bestimmen oder nur dann, wenn eine bestimmte Zeit lang keine Satellitensignale empfangen wurden oder das zusammen mit bereits gespeicherten Satellitendaten gespeicherte Ablaufdatum für diese Daten erreicht ist. Eine andere Möglichkeit in der es sinnvoll ist, neue Satellitendaten anzufordern ist, wenn sich aufgrund bestimmter Daten, die im mobilen Endgerät 200, 300 vorhanden bzw. gespeichert wurden, ergibt, daß sich der Aufenthaltsbereich des mobilen Endgerätes 200, 300 derart geändert hat, daß die vorhandenen Satellitendaten aufgrund der Ortsveränderung nicht mehr aktuell sind. Eine solche Ortsveränderung kann sich wiederum aus den oben genannten Daten ergeben (Cell-ID, Mobile Country Code, Funkkennungen, etc.).

Bei einer weiteren bevorzugten Ausführungsform ist es möglich, daß ein mobiles Endgerät 300, einen Bestimmungsdatensatz DY anfordert, wenn der Benutzer ein bestimmtes Bedienungselement betätigt. Besonders bevorzugt ist in dieser Hinsicht, daß zusammen mit einem Tastendruck einer bevorzugt dedizierten Taste weitere Funktionen verbunden sind: Zum Beispiel kann über diesen Tastendruck ein Navigationsprogramm gestartet werden, das zunächst die gegebene geographische Position bestimmt und hierzu erforderlichenfalls einen Bestimmungssatz DY anfordert und in einem nächsten Bedienungsschritt die Eingabe einer Zieladresse anfordert. Ein weiteres Beispiel wäre, daß mit dem Tastendruck ein Notrufsystem initiiert wird, so daß Rettungskräften oder Hilfskräften gleichzeitig mit dem Ruf die Position des Rufenden bzw. dessen mobilen Endgerätes 200, 300 übermittelt wird.

Bei einer weiteren bevorzugten (nicht dargestellten) Ausführungsform können Assistenzdatensätze, die von Mobilfunkbetreibern ihren Kunden zur Verfügung gestellt werden und auf Satellitendaten basieren, die von stationären Referenzstationen der Mobilfunkbetreiber (z.B. im Rahmen eines A-GPS Systems) empfangen wurden, im Netzwerk zusätzlich zu Bestimmungsdaten DY von mobilen Referenzgeräten 200 zur Verfügung gestellt werden. Diese Daten sind für Nichtnetzbetreiber in der Regel nicht über das Telefonnetz abrufbar, wenn sie aber von einem Nutzer gelesen und auf einem mobilen Endgerät 200, 300 mit einem GPS-Empfänger 201, 301 gespeichert wurden, können die Informationen aus dem Speicher ausgelesen und im Rahmen eines Informationsdatensatzes DX oder zusammen mit diesem in einem anderen Netzwerk zur Verfügung gestellt werden. In anderen Worten ist es bevorzugt möglich, Informationsdatensätze DX von mobilen Endgeräten 200, 300 als Referenzgeräten 200 mit Assistenzdatensätze von stationären Referenzstationen zu kombinieren bzw. anzureichern, so daß z.B. je nach Qualität, Alter, Anzahl usw. der jeweiligen Daten der Bestimmungsdatensatz DY jeweils Teile der Informationsdatensätze DX sowie der Assistenzdatensätze umfasst.

Bei einer weiteren bevorzugten Ausführungsform ist es zum Beispiel möglich, daß ein Navigationssystem in einem Auto, das längere Zeit ausgeschaltet war und selber keine Kommunikationsmittel aufweist über eine Schnittstelle mit einem Mobiltelefon 300 kommuniziert und über dieses Mobiltelefon 300 einen Bestimmungsdatensatz DY anfordert.

Alternativ oder zusätzlich kann das Verfahren zur Positionierung gemäß der Erfindung oder eine bevorzugte Ausführungsform hiervon bevorzugt in Kombination mit dem an sich bekannten Verfahren des Differential Global Positioning Systems (DGPS) verwendet werden. Bei dem DGPS Verfahren gibt es einen Empfänger 201, 301, dessen Position bestimmt werden soll und der als "Rover" bezeichnet wird, und mindestens einen weiteren Empfänger 201, 301, dessen Position bekannt ist, der als Stützpunkt bezeichnet wird. Ein Stützpunkt kann diverse Informationen über die Ursachen ermitteln, warum die mittels GPS bestimmte Position fehlerhaft ist, da deren Position bekannt ist. Mit diesen Informationen (Korrekturdaten) von einem Stütz- bzw. Referenzpunkt kann ein Rover seine Genauigkeit erhöhen. Die erreichbare Genauigkeit ist u.a. vom Abstand zwischen Rover und Stützpunkt abhängig.

Bei dem einfachsten DGPS-Verfahren übermittelt der Stützpunkt seinen Positionsfehler an den Rover. Dieser korrigiert entsprechend seine Position. Dies funktioniert insbesondere dann, wenn beide Empfänger 201, 301 die gleichen Satelliten auswerten (dies ist typischerweise jedoch nur über eine kurze Distanz und/oder in einer gleichen Umgebung der Fall).

Bei der Methode der Pseudorange-Korrektur berechnet der Stützpunkt die Fehler der Strecken zu den Satelliten und übermittelt diese an den Rover. So ist auch eine Korrektur möglich, wenn von dem Stützpunkt und dem Rover unterschiedliche Satelliten empfangen werden. Dabei sind Genauigkeiten von unter einem Meter möglich.

Die Übermittlung der Korrekturdaten von einem Stützpunkt zum Rover kann mittels Funk erfolgen. Ein Rover ist dann sofort in der Lage, seine Genauigkeit zu erhöhen. Auch im Nachhinein kann eine Korrektur erfolgen, wenn Rover und Stützpunkt alle Daten zur Positionsbestimmung aufzeichnen.

Die Korrekturdaten können von einem Anwender selbst erzeugt werden (mittels eines zweiten GPS-Empfängers) oder von diversen Anbietern bezogen werden (ALF, AMDS, SAPOS, ascos, WAAS (Wide Area Augmentation Service) und EGNOS (European Geostationary Navigation Overlay Service)).

### Bezugszeichenliste

- 101-105: Satellit (insbesondere GPS-Satellit)

- 200: mobiles Endgerät (als bevorzugtes Referenzgerät)
- 201: Empfänger (insbesondere GPS-Empfänger)
- 202: Kommunikationsmittel bzw. Mobiltelefon
- 203: Empfangsmittel (insbesondere Antenne)

- 300: mobiles Endgerät (als bevorzugtes Zielgerät)
- 301: Empfänger (insbesondere GPS- Empfänger)
- 302: Kommunikationsmittel bzw. Mobiltelefon
- 303: Empfangsmittel (insbesondere Antenne)

- 400: Kommunikationseinrichtung

- BST: Basisstation
- 501: Recheneinheit
- 502: Speichereinheit

- DX: Informationsdatensatz
- DY: Bestimmungsdatensatz

## Patentansprüche

1. Basisstation (BST) mit einer Kommunikationseinrichtung (400) für ein Netzwerk mit mobilen Endgeräten (200, 300), wie z. B. Mobiltelefonen, mit Empfangsmitteln (203, 303) zum Empfang von Satellitensignalen, mittels derer die geographische Position der Empfangsmittel (203; 303) ermittelt werden kann,
wobei die Kommunikationseinrichtung (400) derart gestaltet ist, daß sie mit den mobilen Endgeräten (200, 300) Daten austauschen kann,
wobei die Basisstation (BST) derart gestaltet ist, daß sie Informationsdatensätze empfangen kann, die von einem oder/mehreren mobilen Endgeräten als Referenzgeräten (200) zur Verfügung gestellt werden, und die Basisstation (BST) einen Bestimmungsdatensatz einem mobilen Endgerät als Zielgerät (300) zur Verfügung stellen kann, und
wobei die Informationsdatensätze zumindest Satellitensignale oder davon abgeleitete Daten enthalten und der Bestimmungsdatensatz auf einem oder mehreren Informationsdatensätzen basiert, und derart gestaltet ist, daß es dem Zielgerät (300) aufgrund des Bestimmungsdatensatzes möglich ist, von Satelliten (101, 102, 103, 104, 105) empfangene Daten auszuwerten.

2. Basisstation (BST) nach Anspruch 1, welche derart gestaltet ist, daß sie in Abhängigkeit von zumindest einem bestimmten Kriterium einem Zielgerät (300) einen Informationsdatensatz entweder unverändert als Bestimmungsdatensatz zur Verfügung stellt oder einen oder mehrere Informationsdatensätze weiterverarbeitet, wobei die Weiterverarbeitung in Abhängigkeit von dem- oder denselben oder zumindest einem anderen Kriterium erfolgt, und in weiterverarbeiteter Form als Bestimmungsdatensatz zur Verfügung stellt, wobei die jeweiligen Kriterien insbesondere anhand von folgenden einzelnen Parametern oder anhand einer Kombination der folgenden Parameter gewonnen werden können:
- Informationsdatensatz enthält Daten aus den Satellitensignalen in Rohform,
- Informationsdatensatz, enthält z. B. im Referenzgerät (200) in bestimmter Weise weiterverarbeitete Daten aus den Satellitensignalen,
- geographische Position des Empfangsmittels (203) des Referenzgeräts (200),
- geographischer Aufenthaltsbereich des Empfangsmittels (303) des Zielgerätes (300) für das der Bestimmungsdatensatz zur Verfügung gestellt werden soll,
- Anzahl von Satelliten, von denen das Referenzgerät (200) Satellitensignale empfangen hat,
- Identitäten der einzelnen Satelliten, von denen das Referenzgerät (200) Satellitensignale empfangen hat,
- Empfangsqualität der Satellitensignale von den einzelnen Satelliten, die von dem Referenzgerät (200) empfangen wurden,
- Alter des empfangenen Informationsdatensatzes,
- Art des Referenzgeräts (200) und/oder
- Art des Empfangsmittels (203) des Referenzgeräts (200).

3. Basisstation (BST) nach einem der vorstehenden Ansprüche, die derart gestaltet ist, daß der geographische Aufenthaltsbereich des Empfangsmittels (303) des Zielgerätes (300) ohne bereits erfolgten Satellitensignalempfang seitens des Zielgerätes (300) aus Daten vorbestimmt werden kann, die der Basisstation (BST) von dem Zielgerät (300) übermittelt werden, insbesondere aufgrund von Daten, die eine Zuordnung aufgrund einer der folgenden Möglichkeiten ermöglichen:
- Zuordnung zu eines geographischen Aufenthaltsbereiches aufgrund von Kennungen, die bei einer Funk-, Telefon- oder Datenverbindung zwischen einem Zielgerät (300) und der Basisstation (BST) mit übertragen werden, wie insbesondere dem "Mobile Country Code", dem "Mobile Network Code" und/oder dem "Location Area Code",
- Zuordnung zu einem geographischen Aufenthaltsbereich aufgrund von dienstanbieterspezifischen Informationen, wie insbesondere der Cell-ID,
- Zuordnung zu einem geographischen Aufenthaltsbereich aufgrund einer eingegebenen Zieladresse, bzw. den Zielkoordinaten,
- Zuordnung zu einem geographischen Aufenthaltsbereich aufgrund einer vom Benutzer eingegebenen Position und/oder
- Zuordnung zu einem geographischen Aufenthaltsbereich aufgrund des Empfangs von Signalen, die einem geographischen Aufenthaltsbereich zuzuordnen sind, wie Kennungen von örtlich lokalisierten Funknetzen wie z. B. WLAN-, Bluetooth-, Near-Field-, RFID- oder RDS-Kennungen.

4. Basisstation (BST) nach einem der vorstehenden Ansprüche, die derart gestaltet ist, daß einem mobilen Endgerät (200, 300) mitgeteilt wird, ob und/oder unter welchen Voraussetzungen das mobile Endgerät als Referenzgerät (200) dienen soll und einen Informationsdatensatz bereitstellen soll, wobei die Voraussetzungen in Abhängigkeit von in der Basisstation (BST) bereits gespeicherten Satellitendaten gewählt werden können und insbesondere auf die Anzahl der von dem Empfangsmittel (303) des Zielgeräts (300) empfangenen Satelliten (101, 102, 103, 104, 105) oder die Empfangsqualität, mit der Satelliten von dem Empfangsmittel empfangen werden, Bezug nehmen können.

5. Mobiles Endgerät (200, 300) insbesondere Mobiltelefon oder Smartphone mit
einem Empfangsmittel (203, 303) zum Empfang von Satellitensignalen, mittels derer die geographische Position der Empfangsmittel ermittelt werden kann, und
Kommunikationsmitteln (202, 302) zum Senden von Daten,
wobei das mobile Endgerät derart gestaltet ist, daß es als Referenzgerät (200) über seine Kommunikationsmittel (202) einen Informationsdatensatz zur Verfügung stellen kann, der zumindest Satellitensignale oder davon abgeleitete Daten enthält, auf Basis derer optional unter Hinzuziehung anderer Informationsdatensätze anderer Referenzgeräte (200) ein Bestimmungsdatensatz erstellt werden kann, der derart gestaltet ist, daß es einem Zielgerät (300) aufgrund des Bestimmungsdatensatzes möglich ist, von Satelliten (101, 102, 103, 104, 105) empfangene Daten auszuwerten.

6. Mobiles Endgerät (200, 300) nach Anspruch 5, das derart gestaltet ist, daß es als Zielgerät (300) dienen kann, in dem Sinn, daß es über seine Kommunikationsmittel (302) einen Bestimmungsdatensatz empfangen kann, der geeignet ist, daß es seine eigene geographische Position schneller bestimmen kann.

7. Mobiles Endgerät (200, 300) nach einem der Ansprüche 5 bis 6, das derart gestaltet ist, daß es einen Informationsdatensatz nur dann im Netzwerk bereit stellt, wenn bestimmte Kriterien erfüllt sind, die insbesondere aus einem der folgenden Parameter oder einer Kombination der folgenden Parameter gewonnen werden können:
- Freigabe durch den Benutzer, daß ein Informationsdatensatz bereitgestellt werden kann,
- geographische Position des mobilen Endgerätes (200, 300),
- Anzahl von Satelliten, von denen das mobile Endgerät (200, 300) Satellitensignale empfangen hat,
- Empfangsqualität der Satellitensignale, die von dem mobilen Endgerät (200, 300) empfangen wurden,
- Alter des vom mobilen Endgerät (200, 300) empfangenen Informationsdatensatzes,
- Art des mobilen Endgerätes (200, 300),
- Art des Empfangsmittels (203, 303) des mobilen Endgerätes (200, 300),
- Anforderung eines Informationsdatensatzes durch die Basisstation (BST) oder ein anderes mobiles Endgerät, und/oder
- Voraussetzungen die von der Basisstation (BST) oder dem anderen mobilen Endgerät (200, 300) mit der Anfrage verbunden wurden sind erfüllt.

8. Mobiles Endgerät (200, 300) nach einem der Ansprüche 5 bis 7, das derart gestaltet ist, daß es einen Bestimmungsdatensatz im Netzwerk anfordert, wenn das mobile Endgerät (200, 300) eine bestimmte Zeit lang keine Satellitensignale empfangen hat und/oder gespeicherte Daten ein Verfallsdatum erreicht haben und/oder sich bestimmte gespeicherte Daten seit dem letzten Satellitenempfang geändert haben, wie z.B. der "mobile country code" und/oder der Benutzer einen Bestimmungsdatensatz manuell anfordert.

9. Mobiles Endgerät (200, 300) nach einem der Ansprüche 5 bis 8, das ein Bedienungselement aufweist, durch dessen Betätigung direkt und ohne weitere nachfolgende Bedienungsschritte durch den Benutzer ein Bestimmungsdatensatz im Netzwerk angefordert wird.

10. Mobiles Endgerät (200, 300) nach einem der Ansprüche 5 bis 9, das derart gestaltet ist, daß es in einem Informationsdatensatz nicht nur Satellitenrohdaten zur Verfügung stellt sondern diese bereits aufbereitet, insbesondere in Verbindung mit zusätzlichen Daten.

11. Mobiles Endgerät (200, 300) nach einem der Ansprüche 5 bis 10, das derart gestaltet ist, daß es Assistenzdatensätze, die es aus einem anderen Netzwerk empfangen hat, der Basisstation (BST) als Bestimmungsdatensätze zur Verfügung stellt.

12. Satellitendatenempfänger (201, 301) mit einem Empfangsmittel (203, 303) und einer Schnittstelle zur Kommunikation mit einem mobilen Endgerät (200, 300) wie z. B. einer Kabelverbindung, einer Bluetooth- oder WLAN-Schnittstelle, der selber keine Kommunikationsmittel (202, 302) zur direkten Kommunikation mit der Basisstation (BST) aufweist, aber eine Kommunikation mit der Basisstation (BST) über die Schnittstelle mit dem mobilen Endgerät (200, 300) und dessen Kommunikationsmittel (202, 302) herstellen kann, wobei der Satellitendatenempfänger (201, 301) derart gestaltet ist, daß er zusammen mit diesem Kommunikationsmittler die Merkmale eines mobilen Endgeräts (200, 300) nach einem der Ansprüche 5 bis 11 aufweist.

13. Netzwerk mit einer Basisstation (BST) mit einer Kommunikationseinrichtung (400) und zumindest zwei mobilen Endgeräten (200, 300) mit Kommunikationsmitteln (202, 302) und Empfangsmitteln (203, 303) zum Empfang von Satellitensignalen, mittels derer die geographische Position der Empfangsmittel ermittelt werden kann,
wobei Kommunikationseinrichtung (400) und Kommunikationsmittel (202, 302) derart gestaltet sind, daß die mobilen Endgeräten (200, 300) über sie mit der Basisstation (BST) Daten austauschen können,
wobei zumindest ein mobiles Endgerät als ein Referenzgerät (200) im Netzwerk einen Informationsdatensatz zur Verfügung stellen kann, der Satellitensignale oder davon abgeleitete Daten enthält, und
wobei zumindest einem mobilen Endgerät als einem Zielgerät (300) im Netzwerk ein Bestimmungsdatensatz zur Verfügung gestellt wird, der auf zumindest einem Informationsdatensatz basiert und derart gestaltet ist, daß es dem Zielgerät (300) aufgrund dieses Bestimmungsdatensatzes möglich ist, von Satelliten (101, 102, 103, 104, 105) empfangene Daten auszuwerten.

14. Netzwerk nach Anspruch 13, welches derart gestaltet ist, daß in Abhängigkeit von zumindest einem bestimmten Kriterium einem Zielgerät (300) ein Informationsdatensatz entweder unverändert als Bestimmungsdatensatz zur Verfügung gestellt wird oder ein oder mehrere Informationsdatensätze weiterverarbeitet werden, wobei die Weiterverarbeitung in Abhängigkeit von dem- oder denselben oder von zumindest einem anderen Kriterium erfolgt, und in weiterverarbeiteter Form als Bestimmungsdatensatz zur Verfügung gestellt werden, wobei die jeweiligen Kriterien insbesondere anhand von folgenden einzelnen Parametern oder anhand einer Kombination der folgenden Parameter gewonnen werden können:
- Informationsdatensatz enthält Daten aus den Satellitensignalen in Rohform,
- Informationsdatensatz enthält z. B. im Referenzgerät (200) in bestimmter Weise weiterverarbeitete Daten aus den Satellitensignalen,
- geographische Position des Empfangsmittels (203) des Referenzgeräts (200),
- geographischer Aufenthaltsbereich des Empfangsmittels (303) des Zielgerätes (300) für das der Bestimmungsdatensatz zur Verfügung gestellt werden soll,
- Anzahl von Satelliten, von denen das Referenzgerät (200) Satellitensignale empfangen hat,
- Identitäten der einzelnen Satelliten, von denen das Referenzgerät (200) Satellitensignale empfangen hat,
- Empfangsqualität der Satellitensignale von den einzelnen Satelliten, die von dem Referenzgerät (200) empfangen wurden,
- Alter des empfangenen Informationsdatensatzes,
- Art des Referenzgeräts (200) und/oder
- Art des Empfangsmittels (203) des Referenzgeräts (200).

15. Netzwerk nach einem der Ansprüche 13 bis 14, das derart gestaltet ist, daß der geographische Aufenthaltsbereich des Empfangsmittels (303) des Zielgerätes (300) ohne bereits erfolgten Satellitensignalempfang seitens des Zielgerätes (300) aus Daten vorbestimmt werden kann, die im Netzwerk von dem Zielgerät (300) zur Verfügung gestellt werden, insbesondere aufgrund von Daten, die eine Zuordnung aufgrund einer der folgenden Möglichkeiten ermöglichen:
- Zuordnung zu einem geographischen Aufenthaltsbereich aufgrund von Kennungen, die bei einer Funk-, Telefon- oder Datenverbindung zwischen einem Zielgerät (300) und dem Netzwerk mit übertragen werden wie dem "Mobile Country Code", und/oder dem "Mobile Network Code" und/oder dem "Location Area Code",
- Zuordnung zu einem geographischen Aufenthaltsbereich aufgrund von dienstanbieterspezifischen Informationen wie der Cell-ID,
- Zuordnung zu einem geographischen Aufenthaltsbereich aufgrund einer eingegebenen Zieladresse, bzw. den Zielkoordinaten,
- Zuordnung zu einem geographischen Aufenthaltsbereich aufgrund einer vom Benutzer eingegebenen Position und/oder
- Zuordnung zu einem geographischen Aufenthaltsbereich aufgrund des Empfangs von Signalen, die einer geographischen Position zuzuordnen sind, wie Kennungen von örtlich lokalisierten Funknetzen wie z. B. WLAN-, Bluetooth-, Near-Field-, RFID- oder RDS-Kennungen.

16. Netzwerk nach einem der Ansprüche 13 bis 15, das derart gestaltet ist, daß einem mobilen Endgerät (200, 300) mitgeteilt wird, ob und/oder unter welchen Voraussetzungen das mobile Endgerät als Referenzgerät (200) dienen soll und einen Informationsdatensatz bereitstellen soll, wobei die Voraussetzungen in Abhängigkeit von im Netzwerk gespeicherten Daten gewählt werden können und insbesondere auf die Anzahl der von dem Empfangsmittel (303) des Zielgeräts (300) empfangenen Satelliten (101, 102, 103, 104, 105) oder die Empfangsqualität mit der Satelliten von dem Empfangsmittel empfangen werden bezug nehmen können.

17. Verfahren zur Verwendung mit einer Basisstation (BST) mit einer Kommunikationseinrichtung (400) für ein Netzwerk mit mobilen Endgeräten (200, 300), wie z. B. Mobiltelefonen oder Kfz-Navigationssystemen, mit Empfangsmitteln (203, 303) zum Empfang von Satellitensignalen, mittels derer die geographische Position der Empfangsmittel ermittelt werden kann, welches die folgenden Schritte umfaßt:
Aufbauen einer ersten Datenverbindung mit einem mobilen Endgerät als Referenzgerät (200),
Empfangen eines Informationsdatensatzes von dem Referenzgerät (200), der Satellitensignale oder davon abgeleitete Daten enthält,
Aufbauen einer zweiten Datenverbindung mit einem mobilen Endgerät als Zielgerät (300),
dem Zielgerät (300) Zurverfügungstellen eines Bestimmungsdatensatzes basierend auf einem oder mehreren Informationsdatensätzen, der derart gestaltet ist, daß es dem Zielgerät (300) aufgrund des Bestimmungsdatensatzes möglich ist, von Satelliten (101, 102, 103, 104, 105) empfangene Daten auszuwerten.

18. Verfahren nach Anspruch 17, welches weiterhin folgende Schritte umfaßt:
Bestimmen des geographischen Bereichs, in dem sich das Zielgerät (300) befindet,
Auswählen eines oder mehrerer Informationsdatensätze, dessen oder deren Bestandteile unter Berücksichtigung des geographischen Aufenthaltsbereiches des Zielgeräts (300) als Bestimmungsdatensatz für das Zielgerät (300) geeignet sind,
Entscheiden, ob ein einzelner ausgewählter Informationsdatensatz geeignet ist, unverändert als Bestimmungsdatensatz bereitgestellt zu werden, und
Zurverfügungstellen des unveränderten Informationsdatensatzes als Bestimmungsdatensatz oder
Weiterverarbeitung von Bestandteilen eines oder mehrerer Informationsdatensätze zu einem Bestimmungsdatensatz und Zurverfügungstellen dieses Bestimmungsdatensatzes, wobei
das Auswählen, Entscheiden und Weiterverarbeiten aufgrund bestimmter Kriterien erfolgt und die jeweiligen Kriterien insbesondere anhand von folgenden einzelnen Parametern oder anhand einer Kombination der folgenden Parameter gewonnen werden können:
- Informationsdatensatz enthält Daten aus den Satellitensignalen in Rohform,
- Informationsdatensatz enthält z. B. im Referenzgerät (200) in bestimmter Weise weiterverarbeitete Daten aus den Satellitensignalen,
- geographische Position des Empfangsmittels (203) des Referenzgeräts (200),
- geographischer Aufenthaltsbereich des Empfangsmittels (303) des Zielgerätes (300) für das der Bestimmungsdatensatz zur Verfügung gestellt werden soll,
- Anzahl von Satelliten, von denen das Referenzgerät (200) Satellitensignale empfangen hat,
- Identitäten der einzelnen Satelliten, von denen das Referenzgerät (200) Satellitensignale empfangen hat,
- Empfangsqualität der Satellitensignale von den einzelnen Satelliten, die von dem Referenzgerät (200) empfangen wurden,
- Alter des empfangenen Informationsdatensatzes,
- Art des Referenzgeräts (200) und/oder
- Art des Empfangsmittels (202) des Referenzgeräts (200).

19. Verfahren nach Anspruch 18, wobei der geographische Aufenthaltsbereich des Empfangsmittels (303) des Zielgerätes (300) ohne bereits erfolgten Satellitensignalempfang seitens des Zielgerätes (300) aus Daten bestimmt wird, die der Basisstation (BST) von dem Zielgerät (300)übermittelt werden, insbesondere aufgrund von Daten, die eine Zuordnung aufgrund einer der folgenden Möglichkeiten ermöglichen:
- Zuordnung zu eines geographischen Aufenthaltsbereiches aufgrund von Kennungen, die bei einer Funk-, Telefon- oder Datenverbindung zwischen einem Zielgerät (300)und der Basisstation (BST) mit übertragen werden wie dem "Mobile Country Code", und/oder dem "Mobile Network Code" und/oder dem "Location Area Code",
- Zuordnung zu einem geographischen Aufenthaltsbereich aufgrund von dienstanbieterspezifischen Informationen wie der Cell-ID,
- Zuordnung zu einem geographischen Aufenthaltsbereich aufgrund einer eingegebenen Zieladresse, bzw. den Zielkoordinaten,
- Zuordnung zu einem geographischen Aufenthaltsbereich aufgrund einer vom Benutzer eingegebenen Position und/oder
- Zuordnung zu einem geographischen Aufenthaltsbereich aufgrund des Empfangs von Signalen, die einem geographischen Aufenthaltsbereich zuzuordnen sind, wie Kennungen von örtlich lokalisierten Funknetzen wie z. B. WLAN-, Bluetooth-, Near-Field-, RFID- oder RDS-Kennungen.

20. Verfahren nach einem der Ansprüche 17 bis 19, mit dem zusätzlichen Schritt:
einem mobilen Endgerät (200, 300) Mitteilen, ob und/oder unter welchen Voraussetzungen das mobile Endgerät als Referenzgerät (200) dienen soll und einen Informationsdatensatz bereitstellen soll, wobei die Voraussetzungen in Abhängigkeit von in der Basisstation (BST) bereits gespeicherten Satellitendaten gewählt werden können und insbesondere auf die Anzahl der von dem Empfangsmittel (303) des Zielgeräts (300) empfangenen Satelliten (101, 102, 103, 104, 105) oder die Empfangsqualität, mit der Satelliten von dem Empfangsmittel empfangen werden, Bezug nehmen können.

21. Verfahren zur Verwendung mit einem mobilen Endgerät (200, 300) wie z. B. einem Mobiltelefon oder einem Kfz-Navigationssystem mit einem Empfangsmittel (203, 303) zum Empfang von Satellitensignalen, mittels derer die geographische Position des Empfangsmittels ermittelt werden kann, welches die folgenden Schritte umfaßt:
Empfangen von Satellitensignalen,
Aufbauen einer Datenverbindung zu einer Basisstation (BST) und/oder einem anderen mobilen Endgerät (200, 300),
Zurverfügungstellen eines Informationsdatensatzes, der zumindest Teile der empfangenen Satellitensignale oder davon abgeleitete Daten enthält, auf Basis derer optional unter Hinzuziehung anderer Informationsdatensätze anderer mobiler Endgeräte (200, 300) ein Bestimmungsdatensatz erstellt werden kann, der derart gestaltet ist, daß es einem Zielgerät (300)aufgrund des Bestimmungsdatensatzes möglich ist, von Satelliten (101, 102, 103, 104, 105) empfangene Daten auszuwerten.

22. Verfahren nach Anspruch 21, mit den Schritten
Aufbauen einer Datenverbindung mit einer Basisstation (BST) und/oder einem anderen mobilen Endgerät (200, 300),
Senden einer Bestellung in einem Netzwerk, daß ein Bestimmungsdatensatz bereitgestellt werden soll,
Empfangen eines Bestimmungsdatensatzes, und
Auswerten von Satellitendaten aufgrund des Bestimmungsdatensatzes.

23. Verfahren nach einem der Ansprüche 21 oder 22, mit den Schritten
Empfangen einer Anforderung zur Zurverfügungstellung eines Informationsdatensatzes und Prüfen ob mit dieser Anforderung bestimmte Kriterien verbunden wurden, gegebenenfalls
Prüfen ob die Kriterien, die mit der Anforderung verbunden wurden, erfüllt sind und
Zurverfügungstellen eines Informationsdatensatzes, wenn keine Anforderung zusammen mit dem Bestimmungsdatensatz empfangen wurde oder die Kriterien für eine Zurverfügungstellung erfüllt sind.

24. Verfahren nach einem der Ansprüche 22 und 23, mit den Schritten
Prüfen, ob auf dem mobilen Endgerät (200, 300) ein Bestimmungsdatensatz oder ein Satz vergleichbarer Daten gespeichert ist, welcher es dem mobilen Endgerät (200, 300) ermöglicht, von Satelliten (101, 102, 103, 104, 105) empfangene Daten auszuwerten, und
Bestellen eines Bestimmungsdatensatzes im Netzwerk, wenn keine solchen Daten gespeichert sind.

25. Verfahren nach Anspruch 24, wobei die Prüfung anhand des Alters oder des Speicherdatums eines gespeicherten Bestimmungsdatensatzes erfolgt und ein Bestimmungsdatensatz nur dann bestellt wird, wenn das Speicherdatum länger als eine bestimmte Zeit zurückliegt oder das Alter ein bestimmtes Alter übersteigt.

26. Verfahren nach einem der Ansprüche 22 bis 25, wonach ein Bestimmungsdatensatz im Netzwerk bestellt wird, wenn ein Benutzer ein bestimmtes Bedienungselement betätigt..

27. Verfahren nach einem der Ansprüche 21 bis 26, wonach die empfangenen Satellitensignale vor einer Bereitstellung im Netzwerk im mobilen Endgerät (200, 300) insbesondere in Verbindung mit zusätzlichen Daten aufbereitet werden und dann in dieser aufbereiteten Form als Informationsdatensatz bereitgestellt werden.

28. Verfahren nach einem der Ansprüche 21 bis 27 ferner mit den Schritten:
Empfangen von Assistenzdatensätzen aus einem anderen Netzwerk,
Bereitstellen der Assistenzdatensätzen als Bestimmungsdatensätze.

29. Verfahren zur Verwendung in einem Netzwerk bestehend aus zumindest einer Basisstation (BST) und zumindest zwei mobilen Endgeräten (200, 300), wie z. B. Mobiltelefonen oder Kfz-Navigationssystemen, mit Empfangsmitteln (203, 303) zum Empfang von Satellitensignalen, mittels derer die geographische Position der Empfangsmittel ermittelt werden kann, bei dem ein Verfahren nach einem der Ansprüche 17 bis 20 und/oder ein Verfahren nach einem der Ansprüche 21 bis 28 ausgeführt wird.

30. Computerprogrammprodukt, welches computerlesbare Instruktionen aufweist, welche, wenn auf einem geeigneten System geladen und ausgeführt, ein Verfahren nach einem der Ansprüche 17 - 29 ausführt.

31. Computerlesbares Speichermedium mit einem Computerprogrammprodukt nach Anspruch 30, das auf dem computerlesbaren Speichermedium gespeichert ist.
